# EUROPEAN PATENT APPLICATION

(11) **EP 2 575 128 A2**
(43) Date of publication of application: **03.04.2013**
(21) Application number: 12186663.6
(22) Date of filing: 28.09.2012
(51) Int. Cl.: G10L 15/26, G10L 15/183, G10L 15/22

(54) **Using context information to facilitate processing of commands in a virtual assistant**

(30) Priority: 30.09.2011 US 201113250854
(71) Applicant: Apple Inc., Cupertino, CA 95014 (US)
(72) Inventor: Gruber, Thomas, Cupertino, CA California 94062 (US); Keen, Dan, Sunnyvale, CA California 95086 (US); Brigham, Christopher, San Jose, CA California 95112PH 3 (US); Novick, Gregory, Cupertino, CA California CA95014 (US); Phipps, Benjamin, Cupertino, CA California CA95014 (US)
(74) Representative: Barton, Russell Glen

(57) **Abstract**

A virtual assistant uses context information to supplement natural language or gestural input from a user. Context helps to clarify the user's intent and to reduce the number of candidate interpretations of the user's input, and reduces the need for the user to provide excessive clarification input. Context can include any available information that is usable by the assistant to supplement explicit user input to constrain an information-processing problem and/or to personalize results. Context can be used to constrain solutions during various phases of processing, including, for example, speech recognition, natural language processing, task flow processing, and dialog generation.

## Description

### CROSS-REFERENCE TO RELATED APPLICATIONS

This application claims priority as a continuation-in-part of U.S. Utility Application Serial No. 12/479,477, entitled "Contextual Voice Commands", attorney docket number P7393US1, filed June 5, 2009, the entire disclosure of which is incorporated herein by reference.

This application further claims priority as a continuation-in-part of U.S. Utility Application Serial No. 12/987,982, entitled "Intelligent Automated Assistant", attorney docket number P10575US1, filed January 10, 2011, the entire disclosure of which is incorporated herein by reference.

U.S. Utility Application Serial No. 12/987,982 claims priority from U.S. Provisional Patent Application Serial No. 61/295,774, entitled "Intelligent Automated Assistant", attorney docket number SIRIP003P, filed January 18, 2010, the entire disclosure of which is incorporated herein by reference.

This application further claims priority from U.S. Provisional Application Serial No. 61/493,201, entitled "Generating and Processing Data Items That Represent Tasks to Perform", attorney docket number P11337P1, filed June 3, 2011, the entire disclosure of which is incorporated herein by reference.

This application is related to U.S. Utility Application Serial No. _/_, entitled "Generating and Processing Task Items that Represent Tasks to Perform", attorney docket number P11337US1, filed on the same date as the present application, the entire disclosure of which is incorporated herein by reference.

This application is related to U.S. Utility Application Serial No. _/_, entitled "Automatically Adapting User Interfaces for Hands-Free Interaction", attorney docket number P11357US1, filed on the same date as the present application, the entire disclosure of which is incorporated herein by reference.

### FIELD OF THE INVENTION

The present invention relates to virtual assistants, and more specifically to mechanisms for improving interpretation and processing of commands provided to such an assistant.

### BACKGROUND OF THE INVENTION

Today's electronic devices are able to access a large, growing, and diverse quantity of functions, services, and information, both via the Internet and from other sources. Functionality for such devices is increasing rapidly, as many consumer devices, smartphones, tablet computers, and the like, are able to run software applications to perform various tasks and provide different types of information. Often, each application, function, website, or feature has its own user interface and its own operational paradigms, many of which can be burdensome to learn or overwhelming for users. In addition, many users may have difficulty even discovering what functionality and/or information is available on their electronic devices or on various websites; thus, such users may become frustrated or overwhelmed, or may simply be unable to use the resources available to them in an effective manner.

In particular, novice users, or individuals who are impaired or disabled in some manner, and/or are elderly, busy, distracted, and/or operating a vehicle may have difficulty interfacing with their electronic devices effectively, and/or engaging online services effectively. Such users are particularly likely to have difficulty with the large number of diverse and inconsistent functions, applications, and websites that may be available for their use.

Accordingly, existing systems are often difficult to use and to navigate, and often present users with inconsistent and overwhelming interfaces that often prevent the users from making effective use of the technology.

An intelligent automated assistant, also referred to herein as a virtual assistant, can provide an improved interface between human and computer. Such an assistant, which may be implemented as described in related U.S. Utility Application Serial No. 12/987,982 for "Intelligent Automated Assistant", attorney docket number P10575US1, filed January 10, 2011, the entire disclosure of which is incorporated herein by reference, allows users to interact with a device or system using natural language, in spoken and/or text forms. Such an assistant interprets user inputs, operationalizes the user's intent into tasks and parameters to those tasks, executes services to support those tasks, and produces output that is intelligible to the user.

A virtual assistant can draw on any of a number of sources of information to process user input, including for example knowledge bases, models, and/or data. In many cases, the user's input alone is not sufficient to clearly define the user's intent and task to be performed. This could be due to noise in the input stream, individual differences among users, and/or the inherent ambiguity of natural language. For example, the user of a text messaging application on a phone might invoke a virtual assistant and speak the command "call her". While such a command is perfectly reasonable English, it is not a precise, executable statement, since there are many interpretations and possible solutions to this request. Thus, without further information, a virtual assistant may not be able to correctly interpret and process such input. Ambiguity of this type can lead to errors, incorrect actions being performed, and/or excessively burdening the user with requests to clarify input.

### SUMMARY

According to various embodiments of the present invention, a virtual assistant uses context information (also referred to herein as "context") to supplement natural language or gestural input from a user. This helps to clarify the user's intent and to reduce the number of candidate interpretations of the user's input, and reduces the need for the user to provide excessive clarification input. Context can include any available information that is usable by the assistant to supplement explicit user input to constrain an information-processing problem and/or to personalize results. For example, if input from the user includes a pronoun (such as "her" in the command "call her") the virtual assistant can use context to infer the referent of the pronoun, for example to ascertain the identity of the person to be called and/or the telephone number to use. Other uses of context are described herein.

According to various embodiments of the present invention, any of a number of mechanisms can be implemented for acquiring and applying contextual information to perform computations in a virtual assistant implemented on an electronic device. In various embodiments, the virtual assistant is an intelligent automated assistant as described in U.S. Utility Application Serial No. 12/987,982 for "Intelligent Automated Assistant", attorney docket number P10575US1, filed January 10, 2011, the entire disclosure of which is incorporated herein by reference. Such an assistant engages with the user in an integrated, conversational manner using natural language dialog, and invokes external services when appropriate to obtain information or perform various actions. According to the techniques described herein, contextual information is used in such an assistant, for example, to reduce ambiguity when performing information processing functions such as speech recognition, natural language processing, task flow processing, and dialog generation.

According to various embodiments of the present invention, a virtual assistant may be configured, designed, and/or operable to use context in performing various different types of operations, functionalities, and/or features, and/or to combine a plurality of features, operations, and applications of an electronic device on which it is installed. In some embodiments, a virtual assistant of the present invention can use context when performing any or all of: actively eliciting input from a user, interpreting user intent, disambiguating among competing interpretations, requesting and receiving clarifying information as needed, and/or performing (or initiating) actions based on the discerned intent.

Actions can be performed, for example, by activating and/or interfacing with any applications or services that may be available on an electronic device, as well as services that are available over an electronic network such as the Internet. In various embodiments, such activation of external services can be performed via application programming interfaces (APIs) or by any other suitable mechanism. In this manner, a virtual assistant implemented according to various embodiments of the present invention can unify, simplify, and improve the user's experience with respect to many different applications and functions of an electronic device, and with respect to services that may be available over the Internet. The user can thereby be relieved of the burden of learning what functionality may be available on the device and on web-connected services, how to interface with such services to get what he or she wants, and how to interpret the output received from such services; rather, the assistant of the present invention can act as a go-between between the user and such diverse services.

In addition, in various embodiments, the virtual assistant of the present invention provides a conversational interface that the user may find more intuitive and less burdensome than conventional graphical user interfaces. The user can engage in a form of conversational dialog with the assistant using any of a number of available input and output mechanisms, such as for example speech, graphical user interfaces (buttons and links), text entry, and the like. The system can be implemented using any of a number of different platforms, such as device APIs, the web, email, and the like, or any combination thereof. Requests for additional input can be presented to the user in the context of such a conversation. Short and long term memory can be engaged so that user input can be interpreted in proper context given previous events and communications within a given session, as well as historical and profile information about the user.

In addition, in various embodiments, context information derived from user interaction with a feature, operation, or application on a device can be used to streamline the operation of other features, operations, or applications on the device or on other devices. For example, the virtual assistant can use the context of a phone call (such as the person called) to streamline the initiation of a text message (for example to determine that the text message should be sent to the same person, without the user having to explicitly specify the recipient of the text message). The virtual assistant of the present invention can thereby interpret instructions such as "send him a text message", wherein the "him" is interpreted according to context information derived from a current phone call, and/or from any feature, operation, or application on the device. In various embodiments, the virtual assistant takes into account various types of available context data to determine which address book contact to use, which contact data to use, which telephone number to use for the contact, and the like, so that the user need not re-specify such information manually.

Contextual information sources include, for example and without limitation: the current state of a device used as an interface to the assistant, such as the current time, location, application, or data object; personal data such as a user's address book, calendar, and application usage history; and the state of the dialog between the user and the virtual assistant, such as recently mentioned people and/or places.

Context can be applied to a variety of computations and inferences in the operation of the virtual assistant. For example, context can be used to reduce ambiguity or otherwise constrain the number of solutions as user input is processed. Context can thus be used to constrain the solutions during various phases of processing, including for example and without limitation:
- **Speech Recognition** - receiving voice input and generating candidate interpretations in text, for example, "call her", "collar", and "call Herb". Context can be used to constrain which words and phrases are considered by a speech recognition module, how they are ranked, and which are accepted as above a threshold for consideration. For example, the user's address book can add personal names to an otherwise language-general model of speech, so that these names can be recognized and given priority.
- **Natural Language Processing (NLP) -** parsing text and associating the words with syntactic and semantic roles, for example, determining that the user input is about making a phone call to a person referred to by the pronoun "her", and finding a specific data representation for this person. For example, the context of a text messaging application can help constrain the interpretation of "her" to mean "the person with whom I am conversing in text."

- **Task Flow Processing-** identifying a user task, task steps, and task parameters used to assist with the task, for example, which phone number to use for the person referred to as "her". Again, the context of the text messaging application can constrain the interpretation of the phone number to indicate that the system should use the number currently or recently used for a text messaging conversation.
- **Dialog Generation -** generating assistant responses as part of a conversation with the user about their task, for example, to paraphrase the user's intent with the response "OK, I'll call Rebecca on her mobile..." The level of verbosity and informal tone are choices that can be guided by contextual information.

In various embodiments, the virtual assistant of the present invention can control various features and operations of an electronic device. For example, the virtual assistant can call services that interface with functionality and applications on a device via APIs or by other means, to perform functions and operations that might otherwise be initiated using a conventional user interface on the device. Such functions and operations may include, for example, setting an alarm, making a telephone call, sending a text message or email message, adding a calendar event, and the like. Such functions and operations may be performed as add-on functions in the context of a conversational dialog between a user and the assistant. Such functions and operations can be specified by the user in the context of such a dialog, or they may be automatically performed based on the context of the dialog. One skilled in the art will recognize that the assistant can thereby be used as a control mechanism for initiating and controlling various operations on the electronic device, which may be used as an alternative to conventional mechanisms such as buttons or graphical user interfaces. As described herein, contextual information can be used to inform and improve on such use of the virtual assistant as a control mechanism.

### BRIEF DESCRIPTION OF THE DRAWINGS

The accompanying drawings illustrate several embodiments of the invention and, together with the description, serve to explain the principles of the invention according to the embodiments. One skilled in the art will recognize that the particular embodiments illustrated in the drawings are merely exemplary, and are not intended to limit the scope of the present invention.

Fig. 1 is a block diagram depicting a virtual assistant and some examples of sources of context that can influence its operation according to one embodiment.

Fig. 2 is a flow diagram depicting a method for using context at various stages of processing in a virtual assistant, according to one embodiment.

Fig. 3 is a flow diagram depicting a method for using context in speech elicitation and interpretation, according to one embodiment.

Fig. 4 is a flow diagram depicting a method for using context in natural language processing, according to one embodiment.

Fig. 5 is a flow diagram depicting a method for using context in task flow processing, according to one embodiment.

Fig. 6 is a block diagram depicting an example of sources of context distributed between a client and server, according to one embodiment.

Figs. 7a through 7d are event diagrams depicting examples of mechanisms for obtaining and coordinating context information according to various embodiments.

Figs. 8a through 8d depict examples of various representations of context information as can be used in connection with various embodiments of the present invention.

Fig. 9 depicts an example of a configuration table specifying communication and caching policies for various contextual information sources, according to one embodiment.

Fig. 10 is an event diagram depicting an example of accessing the context information sources configured in Fig. 9 during the processing of an interaction sequence, according to one embodiment.

Figs. 11 through 13 are a series of screen shots depicting an example of the use of application context in a text messaging domain to derive a referent for a pronoun, according to one embodiment.

Fig. 14 is a screen shot illustrating a virtual assistant prompting for name disambiguation, according to one embodiment.

Fig. 15 is a screen shot illustrating a virtual assistant using dialog context to infer the location for a command, according to one embodiment.

Fig. 16 is a screen shot depicting an example of the use of a telephone favorites list as a source of context, according to one embodiment.

Figs. 17 through 20 are a series of screen shots depicting an example of the use of current application context to interpret and operationalize a command, according to one embodiment.

Fig. 21 is a screen shot depicting an example of the use of current application context to interpret a command that invokes a different application.

Figs. 22 through 24 are a series of screen shots depicting an example of the use of event context in the form of an incoming text message, according to one embodiment.

Figs. 25A and 25B are a series of screen shots depicting an example of the use of prior dialog context, according to one embodiment.

Fig. 26A and 26B are screen shots depicting an example of a user interface for selecting among candidate interpretations, according to one embodiment.

Fig. 27 is a block diagram depicting an example of one embodiment of a virtual assistant system.

Fig. 28 is a block diagram depicting a computing device suitable for implementing at least a portion of a virtual assistant according to at least one embodiment.

Fig. 29 is a block diagram depicting an architecture for implementing at least a portion of a virtual assistant on a standalone computing system, according to at least one embodiment.

Fig. 30 is a block diagram depicting an architecture for implementing at least a portion of a virtual assistant on a distributed computing network, according to at least one embodiment.

Fig. 31 is a block diagram depicting a system architecture illustrating several different types of clients and modes of operation.

Fig. 32 is a block diagram depicting a client and a server, which communicate with each other to implement the present invention according to one embodiment.

### DETAILED DESCRIPTION OF THE EMBODIMENTS

According to various embodiments of the present invention, a variety of contextual information is acquired and applied to perform information processing functions in support of the operations of a virtual assistant. For purposes of the description, the term "virtual assistant" is equivalent to the term "intelligent automated assistant", both referring to any information processing system that performs one or more of the functions of:
- interpreting human language input, in spoken and/or text form;
- operationalizing a representation of user intent into a form that can be executed, such as a representation of a task with steps and/or parameters;
- executing task representations, by invoking programs, methods, services, APIs, or the like; and
- generating output responses to the user in language and/or graphical form.

An example of such a virtual assistant is described in related U.S. Utility Application Serial No. 12/987,982 for "Intelligent Automated Assistant", attorney docket number P10575US1, filed January 10, 2011, the entire disclosure of which is incorporated herein by reference.

Various techniques will now be described in detail with reference to example embodiments as illustrated in the accompanying drawings. In the following description, numerous specific details are set forth in order to provide a thorough understanding of one or more aspects and/or features described or reference herein. It will be apparent, however, to one skilled in the art, that one or more aspects and/or features described or reference herein may be practiced without some or all of these specific details. In other instances, well known process steps and/or structures have not been described in detail in order to not obscure some of the aspects and/or features described or reference herein.

One or more different inventions may be described in the present application. Further, for one or more of the invention(s) described herein, numerous embodiments may be described in this patent application, and are presented for illustrative purposes only. The described embodiments are not intended to be limiting in any sense. One or more of the invention(s) may be widely applicable to numerous embodiments, as is readily apparent from the disclosure. These embodiments are described in sufficient detail to enable those skilled in the art to practice one or more of the invention(s), and it is to be understood that other embodiments may be utilized and that structural, logical, software, electrical and other changes may be made without departing from the scope of the one or more of the invention(s). Accordingly, those skilled in the art will recognize that the one or more of the invention(s) may be practiced with various modifications and alterations. Particular features of one or more of the invention(s) may be described with reference to one or more particular embodiments or figures that form a part of the present disclosure, and in which are shown, by way of illustration, specific embodiments of one or more of the invention(s). It should be understood, however, that such features are not limited to usage in the one or more particular embodiments or figures with reference to which they are described. The present disclosure is neither a literal description of all embodiments of one or more of the invention(s) nor a listing of features of one or more of the invention(s) that must be present in all embodiments.

Headings of sections provided in this patent application and the title of this patent application are for convenience only, and are not to be taken as limiting the disclosure in any way.

Devices that are in communication with each other need not be in continuous communication with each other, unless expressly specified otherwise. In addition, devices that are in communication with each other may communicate directly or indirectly through one or more intermediaries.

A description of an embodiment with several components in communication with each other does not imply that all such components are required. To the contrary, a variety of optional components are described to illustrate the wide variety of possible embodiments of one or more of the invention(s).

Further, although process steps, method steps, algorithms or the like may be described in a sequential order, such processes, methods and algorithms may be configured to work in any suitable order. In other words, any sequence or order of steps that may be described in this patent application does not, in and of itself, indicate a requirement that the steps be performed in that order. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the invention(s), and does not imply that the illustrated process is preferred.

When a single device or article is described, it will be readily apparent that more than one device/article (whether or not they cooperate) may be used in place of a single device/article. Similarly, where more than one device or article is described (whether or not they cooperate), it will be readily apparent that a single device/article may be used in place of the more than one device or article.

The functionality and/or the features of a device may be alternatively embodied by one or more other devices that are not explicitly described as having such functionality/features. Thus, other embodiments of one or more of the invention(s) need not include the device itself.

Techniques and mechanisms described or reference herein will sometimes be described in singular form for clarity. However, it should be noted that particular embodiments include multiple iterations of a technique or multiple instantiations of a mechanism unless noted otherwise.

Although described within the context of technology for implementing an intelligent automated assistant, also known as a virtual assistant, it may be understood that the various aspects and techniques described herein may also be deployed and/or applied in other fields of technology involving human and/or computerized interaction with software.

Other aspects relating to virtual assistant technology (e.g., which may be utilized by, provided by, and/or implemented at one or more virtual assistant system embodiments described herein) are disclosed in one or more of the following, the entire disclosures of which are incorporated herein by reference:
- U.S. Utility Application Serial No. 12/987,982 for "Intelligent Automated Assistant", attorney docket number P10575US1, filed January 10, 2011;
- U.S. Provisional Patent Application Serial No. 61/295,774 for "Intelligent Automated Assistant", attorney docket number SIRIP003P, filed January 18, 2010;
- U.S. Patent Application Serial No. 11/518,292 for "Method And Apparatus for Building an Intelligent Automated Assistant", filed September 8, 2006; and
- U.S. Provisional Patent Application Serial No. 61/186,414 for "System and Method for Semantic Auto-Completion", filed June 12, 2009.

### Hardware Architecture

Generally, the virtual assistant techniques disclosed herein may be implemented on hardware or a combination of software and hardware. For example, they may be implemented in an operating system kernel, in a separate user process, in a library package bound into network applications, on a specially constructed machine, and/or on a network interface card. In a specific embodiment, the techniques disclosed herein may be implemented in software such as an operating system or in an application running on an operating system.

Software/hardware hybrid implementation(s) of at least some of the virtual assistant embodiment(s) disclosed herein may be implemented on a programmable machine selectively activated or reconfigured by a computer program stored in memory. Such network devices may have multiple network interfaces which may be configured or designed to utilize different types of network communication protocols. A general architecture for some of these machines may appear from the descriptions disclosed herein. According to specific embodiments, at least some of the features and/or functionalities of the various virtual assistant embodiments disclosed herein may be implemented on one or more general-purpose network host machines such as an end-user computer system, computer, network server or server system, mobile computing device (e.g., personal digital assistant, mobile phone, smartphone, laptop, tablet computer, or the like), consumer electronic device, music player, or any other suitable electronic device, router, switch, or the like, or any combination thereof. In at least some embodiments, at least some of the features and/or functionalities of the various virtual assistant embodiments disclosed herein may be implemented in one or more virtualized computing environments (e.g., network computing clouds, or the like).

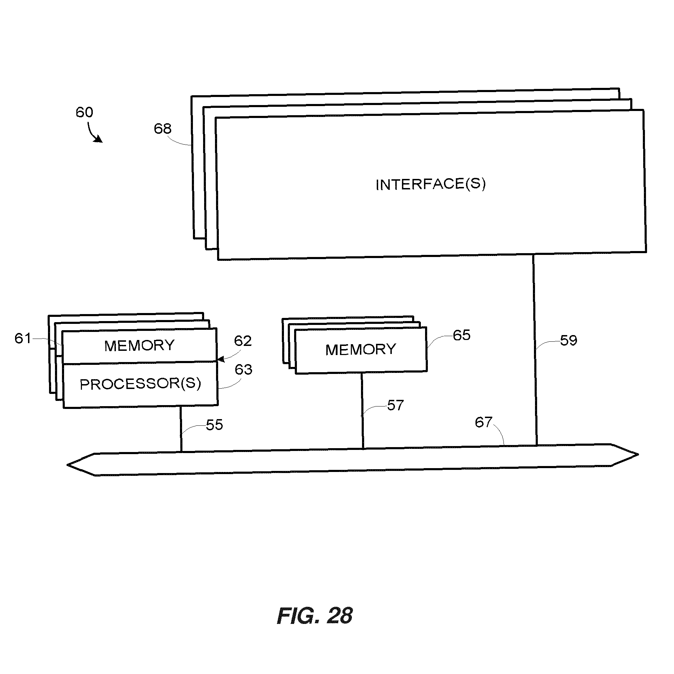

Referring now to Fig. 28, there is shown a block diagram depicting a computing device 60 suitable for implementing at least a portion of the virtual assistant features and/or functionalities disclosed herein. Computing device 60 may be, for example, an end-user computer system, network server or server system, mobile computing device (e.g., personal digital assistant, mobile phone, smartphone, laptop, tablet computer, or the like), consumer electronic device, music player, or any other suitable electronic device, or any combination or portion thereof. Computing device 60 may be adapted to communicate with other computing devices, such as clients and/or servers, over a communications network such as the Internet, using known protocols for such communication, whether wireless or wired.

In one embodiment, computing device 60 includes central processing unit (CPU) 62, interfaces 68, and a bus 67 (such as a peripheral component interconnect (PCI) bus). When acting under the control of appropriate software or firmware, CPU 62 may be responsible for implementing specific functions associated with the functions of a specifically configured computing device or machine. For example, in at least one embodiment, a user's personal digital assistant (PDA) or smartphone may be configured or designed to function as a virtual assistant system utilizing CPU 62, memory 61, 65, and interface(s) 68. In at least one embodiment, the CPU 62 may be caused to perform one or more of the different types of virtual assistant functions and/or operations under the control of software modules/components, which for example, may include an operating system and any appropriate applications software, drivers, and the like.

CPU 62 may include one or more processor(s) 63 such as, for example, a processor from the Motorola or Intel family of microprocessors or the MIPS family of microprocessors. In some embodiments, processor(s) 63 may include specially designed hardware (e.g., application-specific integrated circuits (ASICs), electrically erasable programmable read-only memories (EEPROMs), field-programmable gate arrays (FPGAs), and the like) for controlling the operations of computing device 60. In a specific embodiment, a memory 61 (such as non-volatile random access memory (RAM) and/or read-only memory (ROM)) also forms part of CPU 62. However, there are many different ways in which memory may be coupled to the system. Memory block 61 may be used for a variety of purposes such as, for example, caching and/or storing data, programming instructions, and the like.

As used herein, the term "processor" is not limited merely to those integrated circuits referred to in the art as a processor, but broadly refers to a microcontroller, a microcomputer, a programmable logic controller, an application-specific integrated circuit, and any other programmable circuit.

In one embodiment, interfaces 68 are provided as interface cards (sometimes referred to as "line cards"). Generally, they control the sending and receiving of data packets over a computing network and sometimes support other peripherals used with computing device 60. Among the interfaces that may be provided are Ethernet interfaces, frame relay interfaces, cable interfaces, DSL interfaces, token ring interfaces, and the like. In addition, various types of interfaces may be provided such as, for example, universal serial bus (USB), Serial, Ethernet, Firewire, PCI, parallel, radio frequency (RF), Bluetooth™, near-field communications (e.g., using near-field magnetics), 802.11 (WiFi), frame relay, TCP/IP, ISDN, fast Ethernet interfaces, Gigabit Ethernet interfaces, asynchronous transfer mode (ATM) interfaces, high-speed serial interface (HSSI) interfaces, Point of Sale (POS) interfaces, fiber data distributed interfaces (FDDIs), and the like. Generally, such interfaces 68 may include ports appropriate for communication with the appropriate media. In some cases, they may also include an independent processor and, in some instances, volatile and/or non-volatile memory (e.g., RAM).

Although the system shown in Fig. 28 illustrates one specific architecture for a computing device 60 for implementing the techniques of the invention described herein, it is by no means the only device architecture on which at least a portion of the features and techniques described herein may be implemented. For example, architectures having one or any number of processors 63 can be used, and such processors 63 can be present in a single device or distributed among any number of devices. In one embodiment, a single processor 63 handles communications as well as routing computations. In various embodiments, different types of virtual assistant features and/or functionalities may be implemented in a virtual assistant system which includes a client device (such as a personal digital assistant or smartphone running client software) and server system(s) (such as a server system described in more detail below).

Regardless of network device configuration, the system of the present invention may employ one or more memories or memory modules (such as, for example, memory block 65) configured to store data, program instructions for the general-purpose network operations and/or other information relating to the functionality of the virtual assistant techniques described herein. The program instructions may control the operation of an operating system and/or one or more applications, for example. The memory or memories may also be configured to store data structures, keyword taxonomy information, advertisement information, user click and impression information, and/or other specific non-program information described herein.

Because such information and program instructions may be employed to implement the systems/methods described herein, at least some network device embodiments may include nontransitory machine-readable storage media, which, for example, may be configured or designed to store program instructions, state information, and the like for performing various operations described herein. Examples of such nontransitory machine-readable storage media include, but are not limited to, magnetic media such as hard disks, floppy disks, and magnetic tape; optical media such as CD-ROM disks; magneto-optical media such as floptical disks, and hardware devices that are specially configured to store and perform program instructions, such as read-only memory devices (ROM), flash memory, memristor memory, random access memory (RAM), and the like. Examples of program instructions include both machine code, such as produced by a compiler, and files containing higher level code that may be executed by the computer using an interpreter.

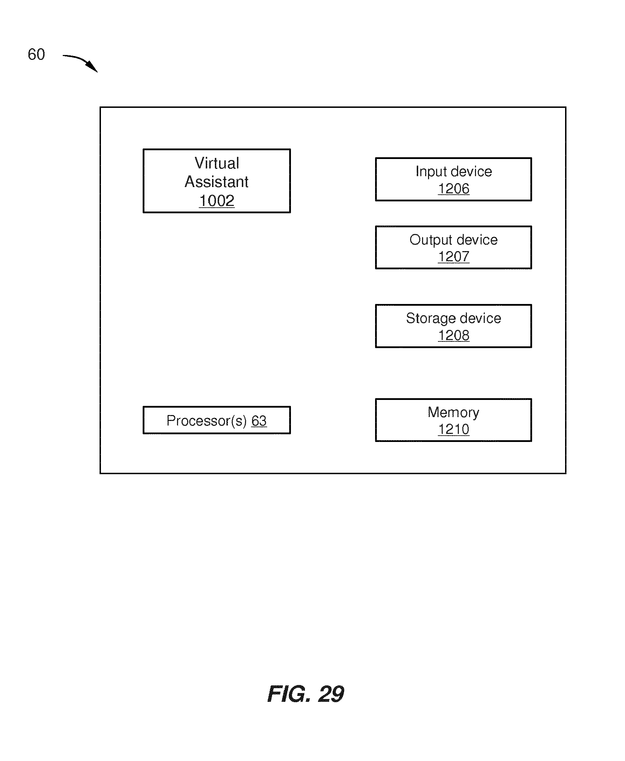

In one embodiment, the system of the present invention is implemented on a standalone computing system. Referring now to Fig. 29, there is shown a block diagram depicting an architecture for implementing at least a portion of a virtual assistant on a standalone computing system, according to at least one embodiment. Computing device 60 includes processor(s) 63 which run software for implementing virtual assistant 1002. Input device 1206 can be of any type suitable for receiving user input, including for example a keyboard, touchscreen, microphone (for example, for voice input), mouse, touchpad, trackball, five-way switch, joystick, and/or any combination thereof. Output device 1207 can be a screen, speaker, printer, and/or any combination thereof. Memory 1210 can be random-access memory having a structure and architecture as are known in the art, for use by processor(s) 63 in the course of running software. Storage device 1208 can be any magnetic, optical, and/or electrical storage device for storage of data in digital form; examples include flash memory, magnetic hard drive, CD-ROM, and/or the like.

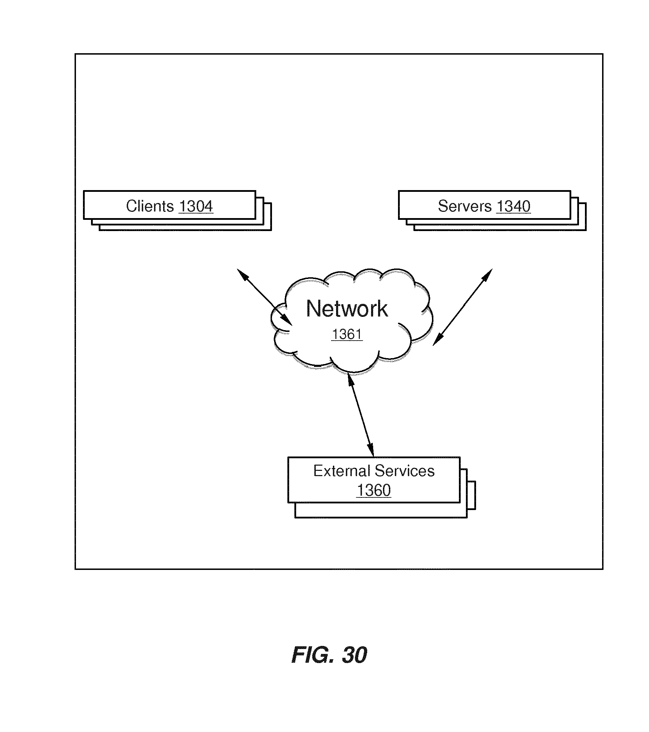

In another embodiment, the system of the present invention is implemented on a distributed computing network, such as one having any number of clients and/or servers. Referring now to Fig. 30, there is shown a block diagram depicting an architecture for implementing at least a portion of a virtual assistant on a distributed computing network, according to at least one embodiment.

In the arrangement shown in Fig. 30, any number of clients 1304 are provided; each client 1304 may run software for implementing client-side portions of the present invention. In addition, any number of servers 1340 can be provided for handling requests received from clients 1304. Clients 1304 and servers 1340 can communicate with one another via electronic network 1361, such as the Internet. Network 1361 may be implemented using any known network protocols, including for example wired and/or wireless protocols.

In addition, in one embodiment, servers 1340 can call external services 1360 when needed to obtain additional information or refer to store data concerning previous interactions with particular users. Communications with external services 1360 can take place, for example, via network 1361. In various embodiments, external services 1360 include web-enabled services and/or functionality related to or installed on the hardware device itself. For example, in an embodiment where assistant 1002 is implemented on a smartphone or other electronic device, assistant 1002 can obtain information stored in a calendar application ("app"), contacts, and/or other sources.

In various embodiments, assistant 1002 can control many features and operations of an electronic device on which it is installed. For example, assistant 1002 can call external services 1360 that interface with functionality and applications on a device via APIs or by other means, to perform functions and operations that might otherwise be initiated using a conventional user interface on the device. Such functions and operations may include, for example, setting an alarm, making a telephone call, sending a text message or email message, adding a calendar event, and the like. Such functions and operations may be performed as add-on functions in the context of a conversational dialog between a user and assistant 1002. Such functions and operations can be specified by the user in the context of such a dialog, or they may be automatically performed based on the context of the dialog. One skilled in the art will recognize that assistant 1002 can thereby be used as a control mechanism for initiating and controlling various operations on the electronic device, which may be used as an alternative to conventional mechanisms such as buttons or graphical user interfaces.

For example, the user may provide input to assistant 1002 such as "I need to wake tomorrow at 8am". Once assistant 1002 has determined the user's intent, using the techniques described herein, assistant 1002 can call external services 1340 to interface with an alarm clock function or application on the device. Assistant 1002 sets the alarm on behalf of the user. In this manner, the user can use assistant 1002 as a replacement for conventional mechanisms for setting the alarm or performing other functions on the device. If the user's requests are ambiguous or need further clarification, assistant 1002 can use the various techniques described herein, including active elicitation, paraphrasing, suggestions, and the like, and including obtaining context information, so that the correct services 1340 are called and the intended action taken. In one embodiment, assistant 1002 may prompt the user for confirmation and/or request additional context information from any suitable source before calling a service 1340 to perform a function. In one embodiment, a user can selectively disable assistant's 1002 ability to call particular services 1340, or can disable all such service-calling if desired.

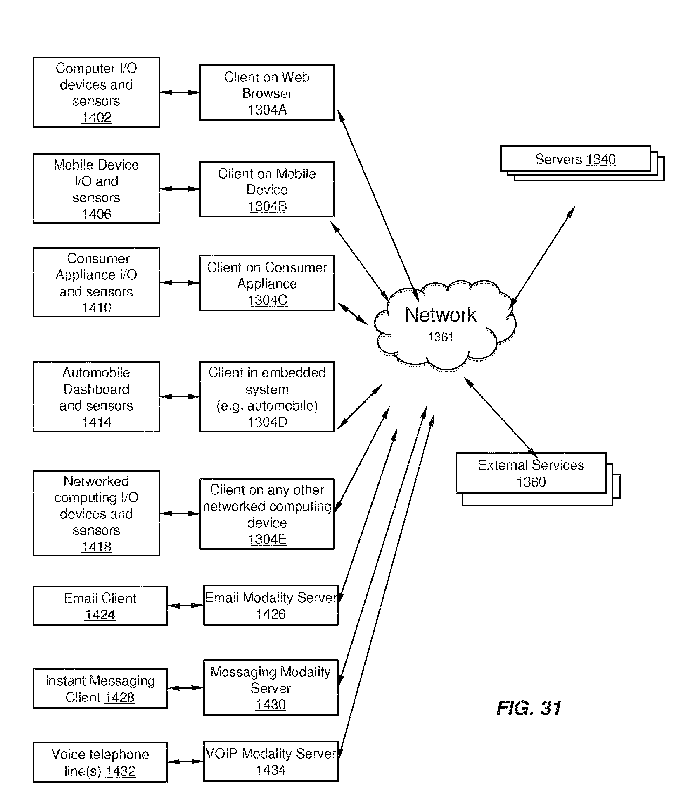

The system of the present invention can be implemented with any of a number of different types of clients 1304 and modes of operation. Referring now to Fig. 31, there is shown a block diagram depicting a system architecture illustrating several different types of clients 1304 and modes of operation. One skilled in the art will recognize that the various types of clients 1304 and modes of operation shown in Fig. 31 are merely exemplary, and that the system of the present invention can be implemented using clients 1304 and/or modes of operation other than those depicted. Additionally, the system can include any or all of such clients 1304 and/or modes of operation, alone or in any combination. Depicted examples include:
- Computer devices with input/output devices and/or sensors 1402. A client component may be deployed on any such computer device 1402. At least one embodiment may be implemented using a web browser 1304A or other software application for enabling communication with servers 1340 via network 1361. Input and output channels may of any type, including for example visual and/or auditory channels. For example, in one embodiment, the system of the invention can be implemented using voice-based communication methods, allowing for an embodiment of the assistant for the blind whose equivalent of a web browser is driven by speech and uses speech for output.
- Mobile Devices with I/O and sensors 1406, for which the client may be implemented as an application on the mobile device 1304B. This includes, but is not limited to, mobile phones, smartphones, personal digital assistants, tablet devices, networked game consoles, and the like.
- Consumer Appliances with I/O and sensors 1410, for which the client may be implemented as an embedded application on the appliance 1304C.
- Automobiles and other vehicles with dashboard interfaces and sensors 1414, for which the client may be implemented as an embedded system application 1304D. This includes, but is not limited to, car navigation systems, voice control systems, in-car entertainment systems, and the like.
- Networked computing devices such as routers 1418 or any other device that resides on or interfaces with a network, for which the client may be implemented as a device-resident application 1304E.
- Email clients 1424, for which an embodiment of the assistant is connected via an Email Modality Server 1426. Email Modality server 1426 acts as a communication bridge, for example taking input from the user as email messages sent to the assistant and sending output from the assistant to the user as replies.
- Instant messaging clients 1428, for which an embodiment of the assistant is connected via a Messaging Modality Server 1430. Messaging Modality server 1430 acts as a communication bridge, taking input from the user as messages sent to the assistant and sending output from the assistant to the user as messages in reply.
- Voice telephones 1432, for which an embodiment of the assistant is connected via a Voice over Internet Protocol (VoIP) Modality Server 1430. VoIP Modality server 1430 acts as a communication bridge, taking input from the user as voice spoken to the assistant and sending output from the assistant to the user, for example as synthesized speech, in reply.

For messaging platforms including but not limited to email, instant messaging, discussion forums, group chat sessions, live help or customer support sessions and the like, assistant 1002 may act as a participant in the conversations. Assistant 1002 may monitor the conversation and reply to individuals or the group using one or more the techniques and methods described herein for one-to-one interactions.

In various embodiments, functionality for implementing the techniques of the present invention can be distributed among any number of client and/or server components. For example, various software modules can be implemented for performing various functions in connection with the present invention, and such modules can be variously implemented to run on server and/or client components. Further details for such an arrangement are provided in related U.S. Utility Application Serial No. 12/987,982 for "Intelligent Automated Assistant", attorney docket number P10575US1, filed January 10, 2011, the entire disclosure of which is incorporated herein by reference.

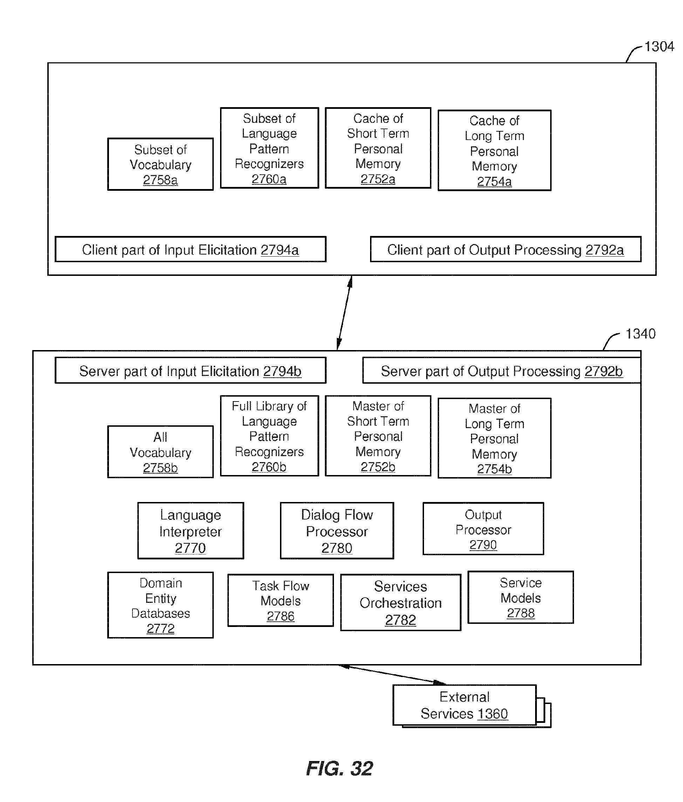

In the example of Fig. 32, input elicitation functionality and output processing functionality are distributed among client 1304 and server 1340, with client part of input elicitation 2794a and client part of output processing 2792a located at client 1304, and server part of input elicitation 2794b and server part of output processing 2792b located at server 1340. The following components are located at server 1340:
- complete vocabulary 2758b;
- complete library of language pattern recognizers 2760b;
- master version of short term personal memory 2752b;
- master version of long term personal memory 2754b.

In one embodiment, client 1304 maintains subsets and/or portions of these components locally, to improve responsiveness and reduce dependence on network communications. Such subsets and/or portions can be maintained and updated according to well known cache management techniques. Such subsets and/or portions include, for example:
- subset of vocabulary 2758a;
- subset of library of language pattern recognizers 2760a;
- cache of short term personal memory 2752a;
- cache of long term personal memory 2754a.

Additional components may be implemented as part of server 1340, including for example:
- language interpreter 2770;
- dialog flow processor 2780;
- output processor 2790;
- domain entity databases 2772;
- task flow models 2786;
- services orchestration 2782;
- service capability models 2788.

Each of these components will be described in more detail below. Server 1340 obtains additional information by interfacing with external services 1360 when needed.

### Conceptual Architecture

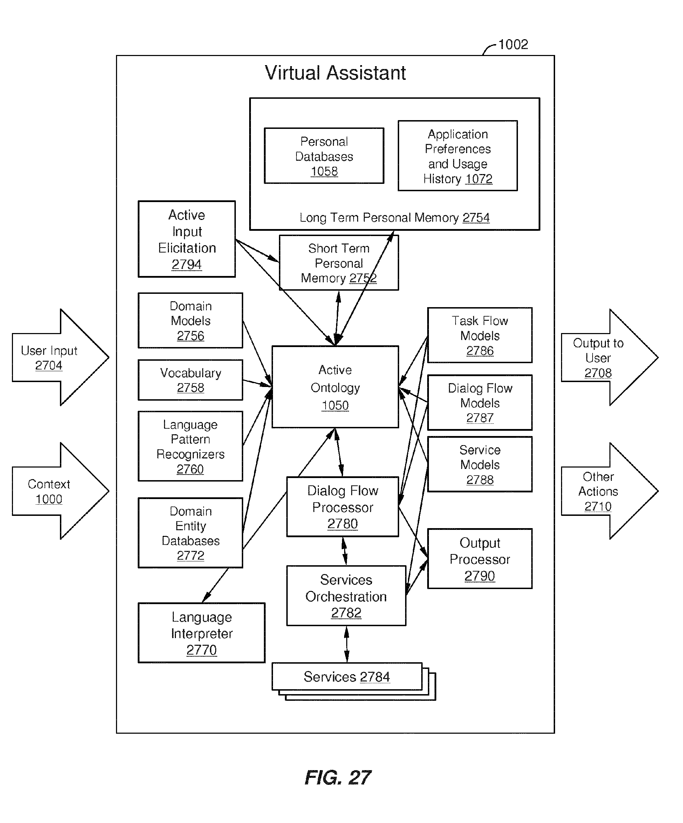

Referring now to Fig. 27, there is shown a simplified block diagram of a specific example embodiment of a virtual assistant 1002. As described in greater detail in related U.S. utility applications referenced above, different embodiments of virtual assistant 1002 may be configured, designed, and/or operable to provide various different types of operations, functionalities, and/or features generally relating to virtual assistant technology. Further, as described in greater detail herein, many of the various operations, functionalities, and/or features of virtual assistant 1002 disclosed herein may enable or provide different types of advantages and/or benefits to different entities interacting with virtual assistant 1002. The embodiment shown in Fig. 27 may be implemented using any of the hardware architectures described above, or using a different type of hardware architecture.

For example, according to different embodiments, virtual assistant 1002 may be configured, designed, and/or operable to provide various different types of operations, functionalities, and/or features, such as, for example, one or more of the following (or combinations thereof):
- automate the application of data and services available over the Internet to discover, find, choose among, purchase, reserve, or order products and services. In addition to automating the process of using these data and services, virtual assistant 1002 may also enable the combined use of several sources of data and services at once. For example, it may combine information about products from several review sites, check prices and availability from multiple distributors, and check their locations and time constraints, and help a user find a personalized solution to their problem.

- automate the use of data and services available over the Internet to discover, investigate, select among, reserve, and otherwise learn about things to do (including but not limited to movies, events, performances, exhibits, shows and attractions); places to go (including but not limited to travel destinations, hotels and other places to stay, landmarks and other sites of interest, and the like); places to eat or drink (such as restaurants and bars), times and places to meet others, and any other source of entertainment or social interaction that may be found on the Internet.
- enable the operation of applications and services via natural language dialog that are otherwise provided by dedicated applications with graphical user interfaces including search (including location-based search); navigation (maps and directions); database lookup (such as finding businesses or people by name or other properties); getting weather conditions and forecasts, checking the price of market items or status of financial transactions; monitoring traffic or the status of flights; accessing and updating calendars and schedules; managing reminders, alerts, tasks and projects; communicating over email or other messaging platforms; and operating devices locally or remotely (e.g., dialing telephones, controlling light and temperature, controlling home security devices, playing music or video, and the like). In one embodiment, virtual assistant 1002 can be used to initiate, operate, and control many functions and apps available on the device.
- offer personal recommendations for activities, products, services, source of entertainment, time management, or any other kind of recommendation service that benefits from an interactive dialog in natural language and automated access to data and services.

According to different embodiments, at least a portion of the various types of functions, operations, actions, and/or other features provided by virtual assistant 1002 may be implemented at one or more client systems(s), at one or more server system(s), and/or combinations thereof.

According to different embodiments, at least a portion of the various types of functions, operations, actions, and/or other features provided by virtual assistant 1002 may use contextual information in interpreting and operationalizing user input, as described in more detail herein.

For example, in at least one embodiment, virtual assistant 1002 may be operable to utilize and/or generate various different types of data and/or other types of information when performing specific tasks and/or operations. This may include, for example, input data/information and/or output data/information. For example, in at least one embodiment, virtual assistant 1002 may be operable to access, process, and/or otherwise utilize information from one or more different types of sources, such as, for example, one or more local and/or remote memories, devices and/or systems. Additionally, in at least one embodiment, virtual assistant 1002 may be operable to generate one or more different types of output data/information, which, for example, may be stored in memory of one or more local and/or remote devices and/or systems.

Examples of different types of input data/information which may be accessed and/or utilized by virtual assistant 1002 may include, but are not limited to, one or more of the following (or combinations thereof):
- Voice input: from mobile devices such as mobile telephones and tablets, computers with microphones, Bluetooth headsets, automobile voice control systems, over the telephone system, recordings on answering services, audio voicemail on integrated messaging services, consumer applications with voice input such as clock radios, telephone station, home entertainment control systems, and game consoles.
- Text input from keyboards on computers or mobile devices, keypads on remote controls or other consumer electronics devices, email messages sent to the assistant, instant messages or similar short messages sent to the assistant, text received from players in multiuser game environments, and text streamed in message feeds.
- Location information coming from sensors or location-based systems. Examples include Global Positioning System (GPS) and Assisted GPS (A-GPS) on mobile phones. In one embodiment, location information is combined with explicit user input. In one embodiment, the system of the present invention is able to detect when a user is at home, based on known address information and current location determination. In this manner, certain inferences may be made about the type of information the user might be interested in when at home as opposed to outside the home, as well as the type of services and actions that should be invoked on behalf of the user depending on whether or not he or she is at home.

- Time information from clocks on client devices. This may include, for example, time from telephones or other client devices indicating the local time and time zone. In addition, time may be used in the context of user requests, such as for instance, to interpret phrases such as "in an hour" and "tonight".
- Compass, accelerometer, gyroscope, and/or travel velocity data, as well as other sensor data from mobile or handheld devices or embedded systems such as automobile control systems. This may also include device positioning data from remote controls to appliances and game consoles.
- Clicking and menu selection and other events from a graphical user interface (GUI) on any device having a GUI. Further examples include touches to a touch screen.
- Events from sensors and other data-driven triggers, such as alarm clocks, calendar alerts, price change triggers, location triggers, push notification onto a device from servers, and the like.

The input to the embodiments described herein also includes the context of the user interaction history, including dialog and request history.

As described in the related U.S. Utility Applications cross-referenced above, many different types of output data/information may be generated by virtual assistant 1002. These may include, but are not limited to, one or more of the following (or combinations thereof):
- Text output sent directly to an output device and/or to the user interface of a device;
- Text and graphics sent to a user over email;
- Text and graphics send to a user over a messaging service;
- Speech output, which may include one or more of the following (or combinations thereof):
   ○ Synthesized speech;
   ○ Sampled speech;
   ○ Recorded messages;
- Graphical layout of information with photos, rich text, videos, sounds, and hyperlinks (for instance, the content rendered in a web browser);
- Actuator output to control physical actions on a device, such as causing it to turn on or off, make a sound, change color, vibrate, control a light, or the like;
- Invoking other applications on a device, such as calling a mapping application, voice dialing a telephone, sending an email or instant message, playing media, making entries in calendars, task managers, and note applications, and other applications;
- Actuator output to control physical actions to devices attached or controlled by a device, such as operating a remote camera, controlling a wheelchair, playing music on remote speakers, playing videos on remote displays, and the like.

It may be appreciated that the virtual assistant 1002 of Fig. 27 is but one example from a wide range of virtual assistant system embodiments which may be implemented. Other embodiments of the virtual assistant system (not shown) may include additional, fewer and/or different components/features than those illustrated, for example, in the example virtual assistant system embodiment of Fig. 27.

Virtual assistant 1002 may include a plurality of different types of components, devices, modules, processes, systems, and the like, which, for example, may be implemented and/or instantiated via the use of hardware and/or combinations of hardware and software. For example, as illustrated in the example embodiment of Fig. 27, assistant 1002 may include one or more of the following types of systems, components, devices, processes, and the like (or combinations thereof):
- One or more active ontologies 1050;
- Active input elicitation component(s) 2794 (may include client part 2794a and server part 2794b);
- Short term personal memory component(s) 2752 (may include master version 2752b and cache 2752a);
- Long-term personal memory component(s) 2754 (may include master version 2754b and cache 2754a; may include, for example, personal databases 1058, application preferences and usage history 1072, and the like);
- Domain models component(s) 2756;
- Vocabulary component(s) 2758 (may include complete vocabulary 2758b and subset 2758a);
- Language pattern recognizer(s) component(s) 2760 (may include full library 2760b and subset 2760a);
- Language interpreter component(s) 2770;
- Domain entity database(s) 2772;
- Dialog flow processor component(s) 2780;
- Services orchestration component(s) 2782;
- Services component(s) 2784;
- Task flow models component(s) 2786;
- Dialog flow models component(s) 2787;
- Service models component(s) 2788;
- Output processor component(s) 2790.

In certain client/server-based embodiments, some or all of these components may be distributed between client 1304 and server 1340.

In one embodiment, virtual assistant 1002 receives user input 2704 via any suitable input modality, including for example touchscreen input, keyboard input, spoken input, and/or any combination thereof. In one embodiment, assistant 1002 also receives context information 1000, which may include event context 2706 and/or any of several other types of context as described in more detail herein.

Upon processing user input 2704 and context information 1000 according to the techniques described herein, virtual assistant 1002 generates output 2708 for presentation to the user. Output 2708 can be generated according to any suitable output modality, which may be informed by context 1000 as well as other factors, if appropriate. Examples of output modalities include visual output as presented on a screen, auditory output (which may include spoken output and/or beeps and other sounds), haptic output (such as vibration), and/or any combination thereof.

Additional details concerning the operation of the various components depicted in Fig. 27 are provided in related U.S. Utility Application Serial No. 12/987,982 for "Intelligent Automated Assistant", attorney docket number P10575US1, filed January 10, 2011, the entire disclosure of which is incorporated herein by reference.

### Context

As described above, in one embodiment virtual assistant 1002 acquires and applies a variety of contextual information to perform information processing functions. The following description sets forth:
- A range of sources of context information for use by virtual assistant 1002;
- Techniques for representing, organizing, and searching context information;
- Methods by which context information can support the operation of several functions of virtual assistants; and
- Methods for efficiently acquiring, accessing, and applying context information in a distributed system.

One skilled in the art will recognize that the following description of sources, techniques, and methods for using context information is merely exemplary, and that other sources, techniques, and methods can be used without departing from the essential characteristics of the present invention.

### Sources of Context

Throughout phases of information processing performed by virtual assistant 1002, several different kinds of context can be used to reduce possible interpretations of user input. Examples include application context, personal data context, and previous dialog history. One skilled in the art will recognize that other sources of context may also be available.

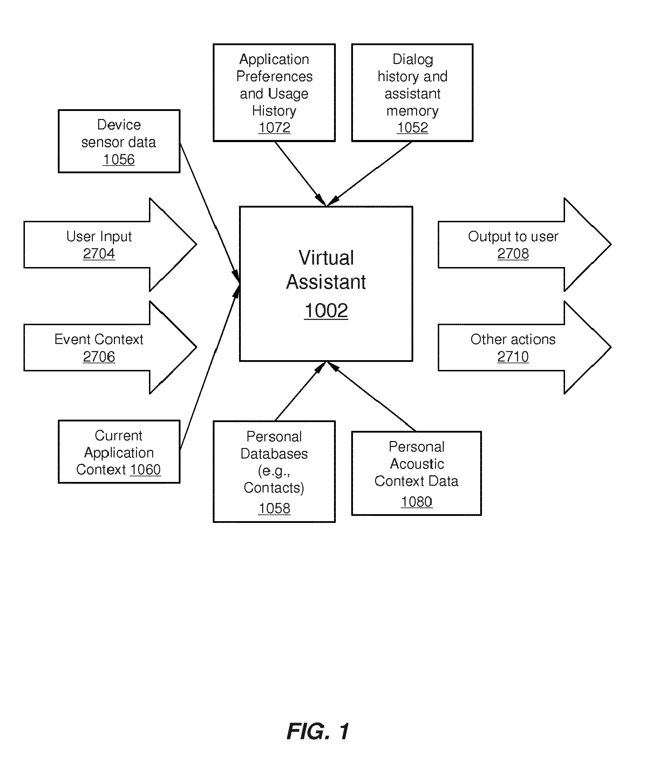

Referring now to Fig. 1, there is shown a block diagram depicting virtual assistant 1002 and some examples of sources of context that can influence its operation according to one embodiment. Virtual assistant 1002 takes user input 2704, such as spoken or typed language, processes the input, and generates output 2708 to the user and/or performs 2710 actions on behalf of the user. It may be appreciated that virtual assistant 1002 as depicted in Fig. 1 is merely one example from a wide range of virtual assistant system embodiments which may be implemented. Other embodiments of virtual assistant systems (not shown) may include additional, fewer and/or different components/features than those illustrated, for example, in the example virtual assistant 1002 depicted in Fig. 1.

As described in more detail herein, virtual assistant 1002 can draw on any of a number of different sources of knowledge and data, such as dictionaries, domain models, and/or task models. From the perspective of the present invention, such sources, referred to as background sources, are internal to assistant 1002. In addition to user input 2704 and background sources, virtual assistant 1002 can also draw on information from several sources of context, including for example device sensor data 1056, application preferences and usage history 1072, dialog history and assistant memory 1052, personal databases 1058, personal acoustic context data 1080, current application context 1060, and event context 2706. These will be described in detail herein.

### Application Context 1060

Application context 1060 refers to the application or similar software state in which the user is doing something. For example, the user could be using a text messaging application to chat with a particular person. Virtual assistant 1002 need not be specific to or part of the user interface of the text messaging application. Rather, virtual assistant 1002 can receive context from any number of applications, with each application contributing its context to inform virtual assistant 1002.

If the user is currently using an application when virtual assistant 1002 is invoked, the state of that application can provide useful context information. For example, if virtual assistant 1002 is invoked from within an email application, context information may include sender information, recipient information, date and/or time sent, subject, data extracted from email content, mailbox or folder name, and the like.

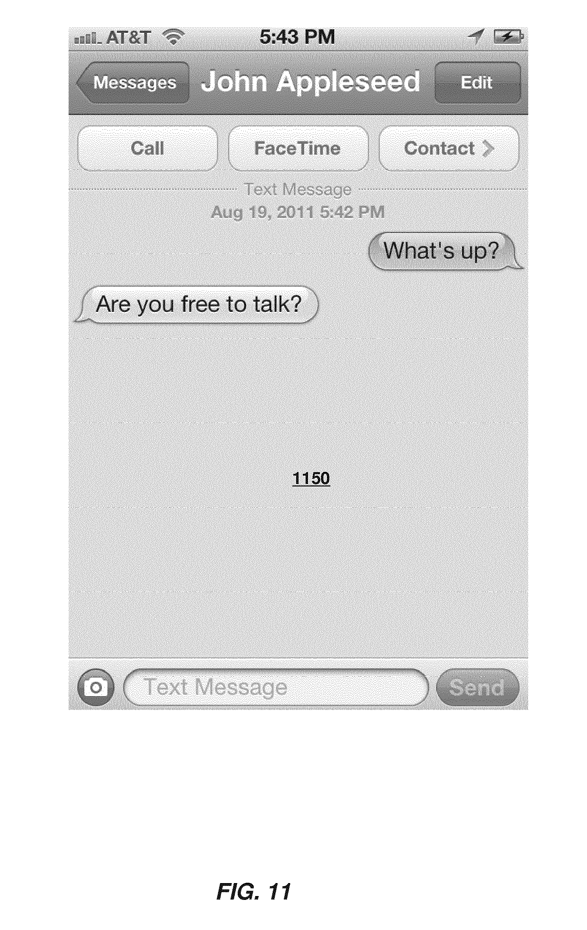

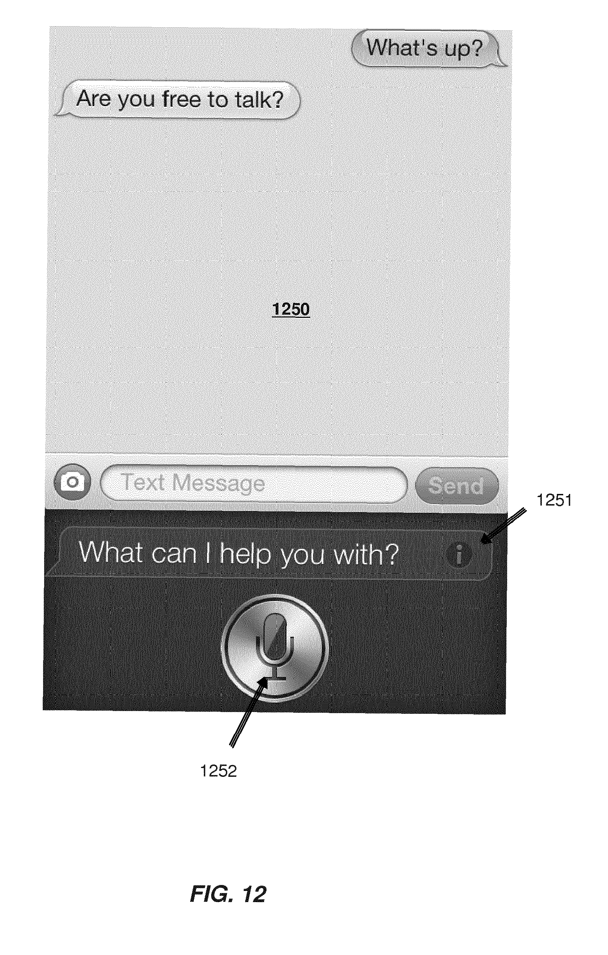

Referring now to Figs. 11 through 13, there is shown a set of screen shots depicting examples of the use of application context in a text messaging domain to derive a referent for a pronoun, according to one embodiment. Fig. 11 depicts screen 1150 that may be displayed while the user is in a text messaging application. Fig. 12 depicts screen 1250 after virtual assistant 1002 has been activated in the context of the text messaging application. In this example, virtual assistant 1002 presents prompt 1251 to the user. In one embodiment, the user can provide spoken input by tapping on microphone icon 1252. In another embodiment, assistant 1002 is able to accept spoken input at any time, and does not require the user to tap on microphone icon 1252 before providing input; thus, icon 1252 can be a reminder that assistant 1002 is waiting for spoken input.

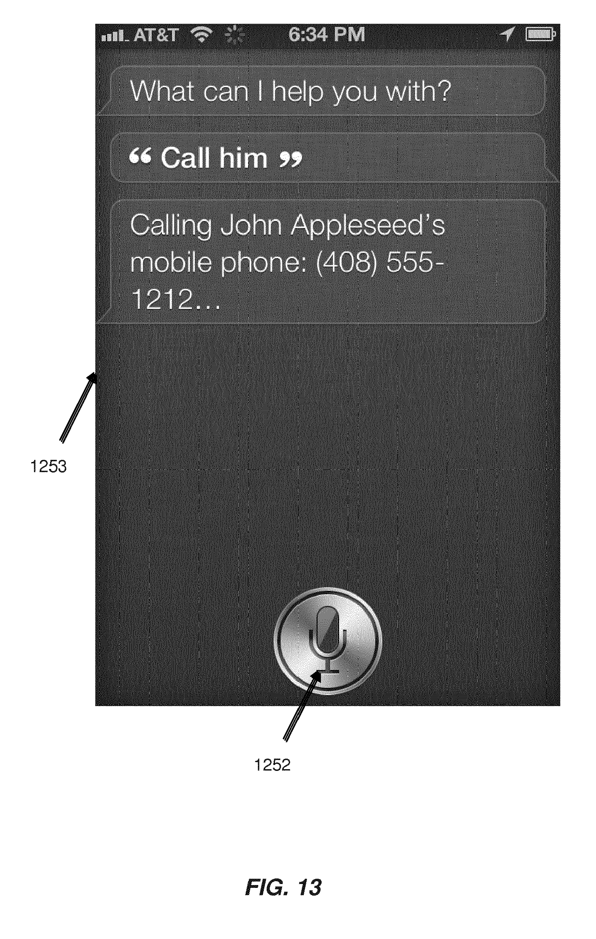

In Fig. 13, the user has engaged in a dialog with virtual assistant 1002, as shown on screen 1253. The user's speech input "call him" has been echoed back, and virtual assistant 1002 is responding that it will call a particular person at a particular phone number. To interpret the user's ambiguous input is, virtual assistant 1002 uses a combination of multiple sources of context to derive a referent for a pronoun, as described in more detail herein.

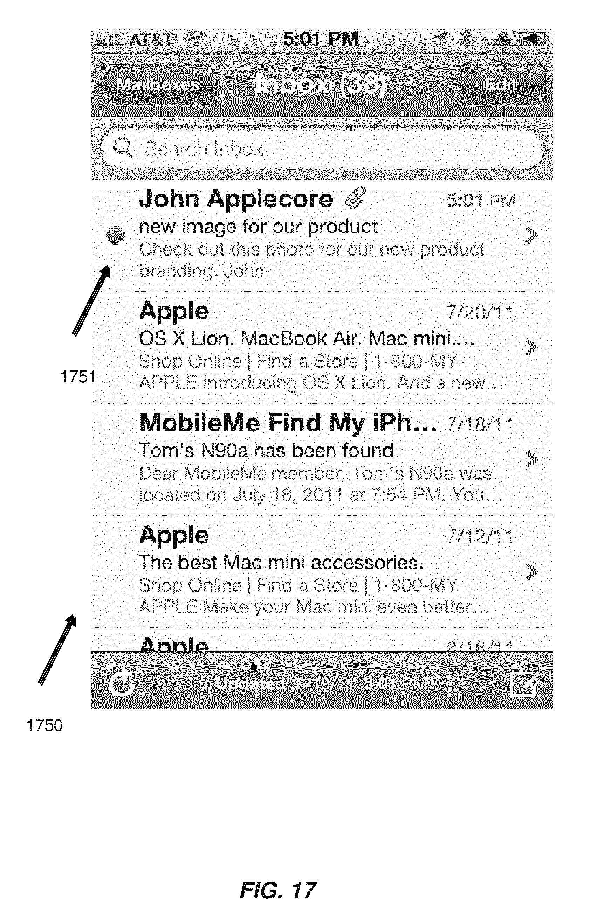

Referring now to Figs. 17 to 20, there is shown another example of the use of current application context to interpret and operationalize a command, according to one embodiment.

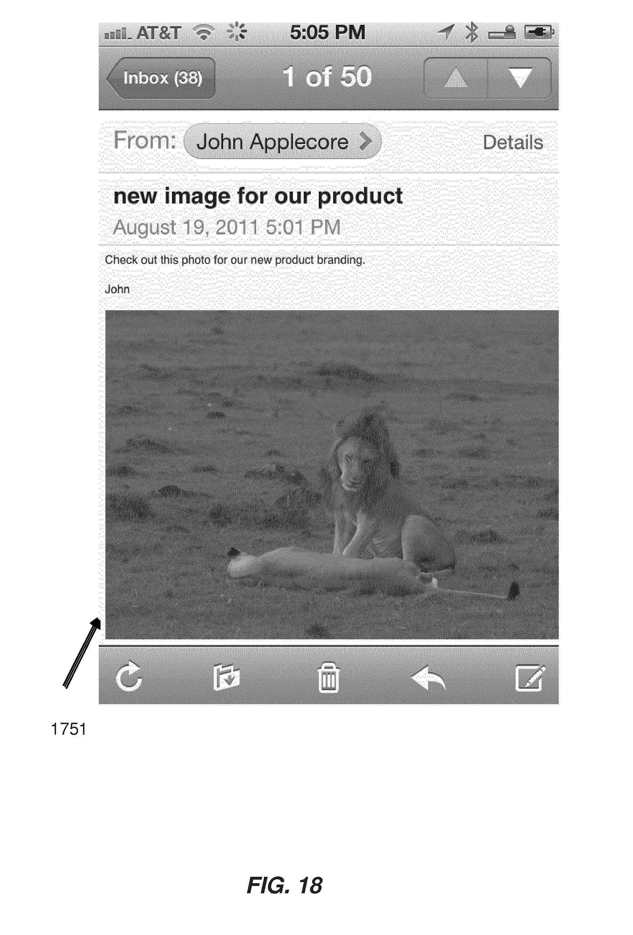

In Fig. 17, the user is presented with his or her email inbox 1750, and selects a particular email message 1751 to view. Fig. 18 depicts email message 1751 after it has been selected for viewing; in this example, email message 1751 includes an image.

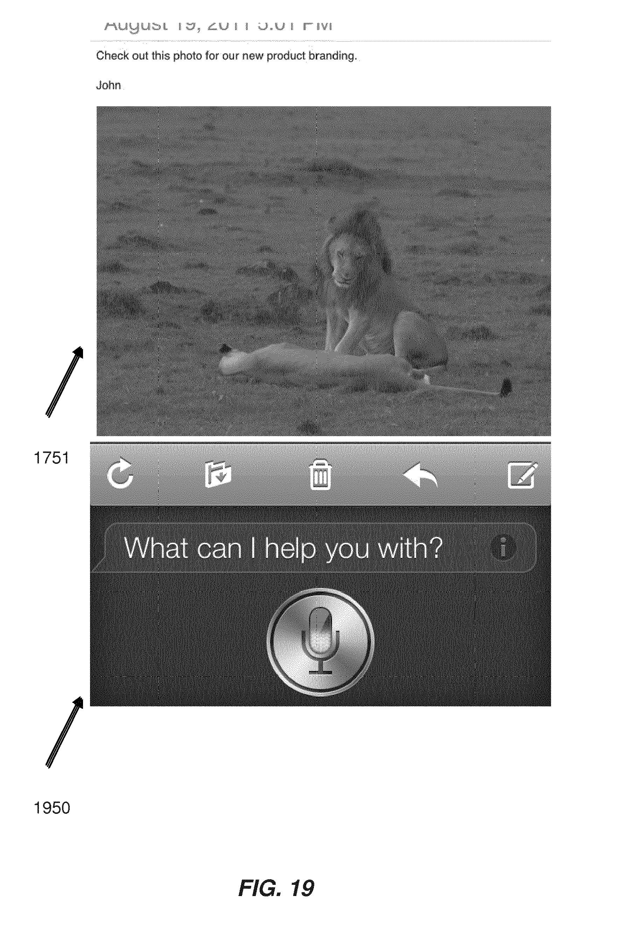

In Fig. 19, the user has activated virtual assistant 1002 while viewing email message 1751 from within the email application. In one embodiment, the display of email message 1751 moves upward on the screen to make room for prompt 150 from virtual assistant 1002. This display reinforces the notion that virtual assistant 1002 is offering assistance in the context of the currently viewed email message 1751. Accordingly, the user's input to virtual assistant 1002 will be interpreted in the current context wherein email message 1751 is being viewed.

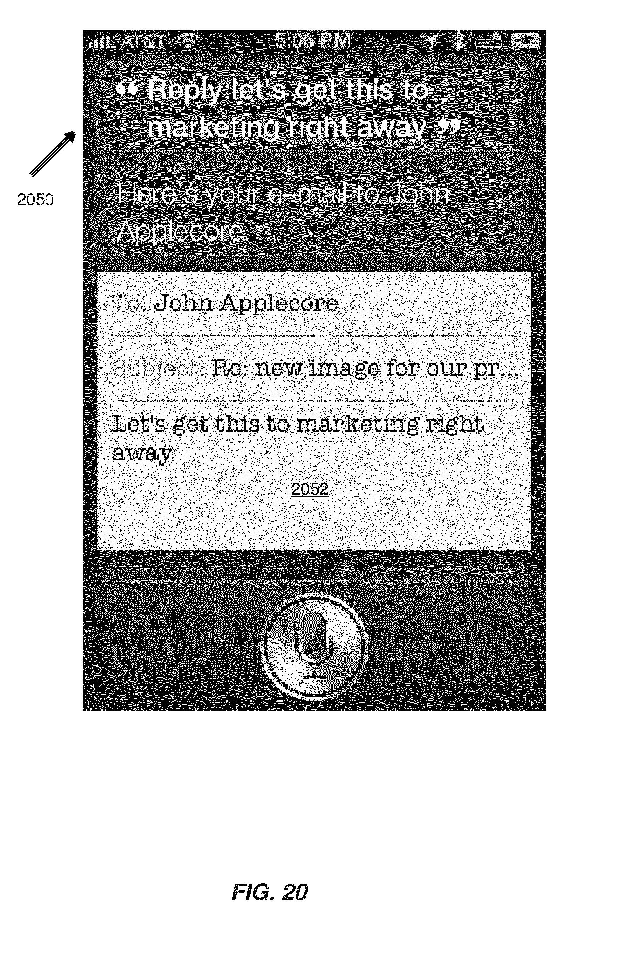

In Fig. 20, the user has provided a command 2050: "Reply let's get this to marketing right away". Context information, including information about email message 1751 and the email application in which it displayed, is used to interpret command 2050. This context can be used to determine the meaning of the words "reply" and "this" in command 2050, and to resolve how to set up an email composition transaction to a particular recipient on a particular message thread. In this case, virtual assistant 1002 is able to access context information to determine that "marketing" refers to a recipient named John Applecore and is able to determine an email address to use for the recipient. Accordingly, virtual assistant 1002 composes email 2052 for the user to approve and send. In this manner, virtual assistant 1002 is able to operationalize a task (composing an email message) based on user input together with context information describing the state of the current application.

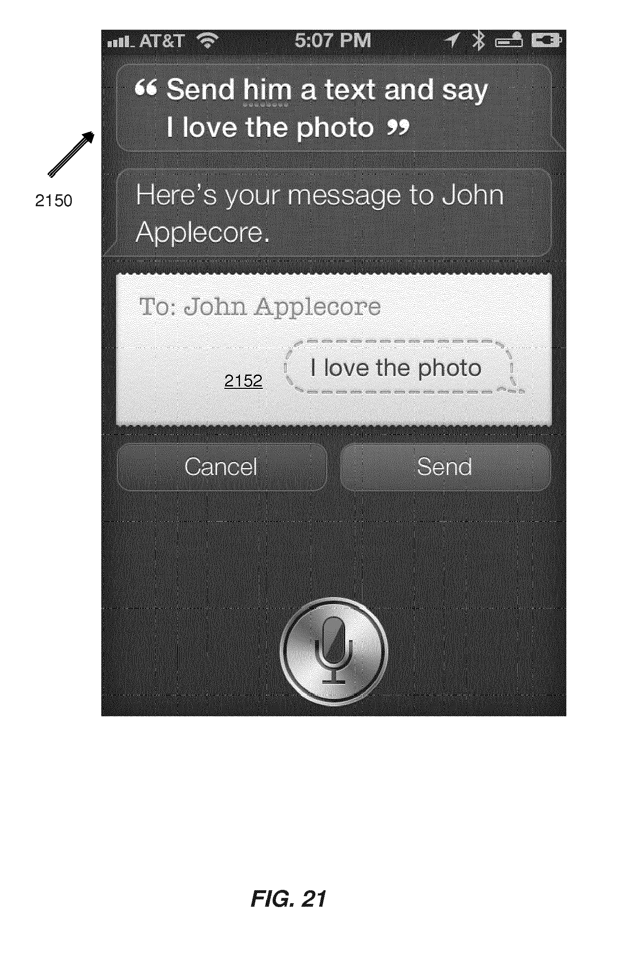

Application context can also help identify the meaning of the user's intent across applications. Referring now to Fig. 21, there is shown an example in which the user has invoked virtual assistant 1002 in the context of viewing an email message (such as email message 1751), but the user's command 2150 says "Send him a text...". Command 2150 is interpreted by virtual assistant 1002 as indicating that a text message, rather than an email, should be sent. However, the use of the word "him" indicates that the same recipient (John Appleseed) is intended. Virtual assistant 1002 thus recognizes that the communication should go to this recipient but on a different channel (a text message to the person's phone number, obtained from contact information stored on the device). Accordingly, virtual assistant 1002 composes text message 2152 for the user to approve and send.

Examples of context information that can be obtained from application(s) include, without limitation:
- identity of the application;
- current object or objects being operated on in the application, such as current email message, current song or playlist or channel being played, current book or movie or photo, current calendar day/week/month, current reminder list, current phone call, current text messaging conversation, current map location, current web page or search query, current city or other location for location-sensitive applications, current social network profile, or any other application-specific notion of current objects;
- names, places, dates, and other identifiable entities or values that can be extracted from the current objects.

### Personal Databases 1058

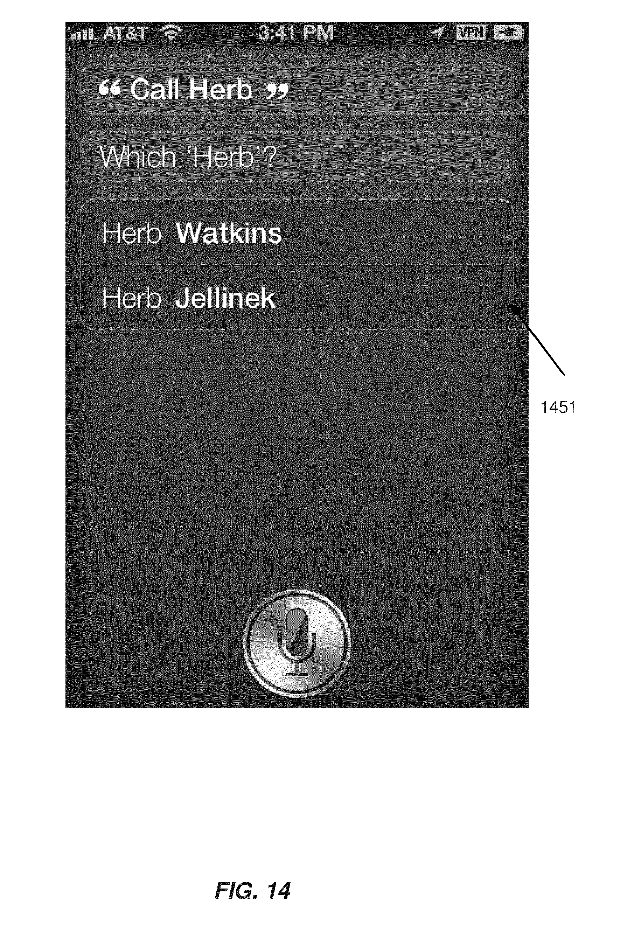

Another source of context data is the user's personal database(s) 1058 on a device such as a phone, such as for example an address book containing names and phone numbers. Referring now to Fig. 14, there is shown an example of a screen shot 1451 wherein virtual assistant 1002 is prompting for name disambiguation, according to one embodiment. Here, the user has said "Call Herb"; virtual assistant 1002 prompts for the user to choose among the matching contacts in the user's address book. Thus, the address book is used as a source of personal data context.

In one embodiment, personal information of the user is obtained from personal databases 1058 for use as context for interpreting and/or operationalizing the user's intent or other functions of virtual assistant 1002. For example, data in a user's contact database can be used to reduce ambiguity in interpreting a user's command when the user referred to someone by first name only. Examples of context information that can be obtained from personal databases 1058 include, without limitation:
- the user's contact database (address book) --- including information about names, phone numbers, physical addresses, network addresses, account identifiers, important dates --- about people, companies, organizations, places, web sites, and other entities that the user might refer to;
- the user's own names, preferred pronunciations, addresses, phone numbers, and the like;
- the user's named relationships, such as mother, father, sister, boss, and the like.
- the user's calendar data, including calendar events, names of special days, or any other named entries that the user might refer to;
- the user's reminders or task list, including lists of things to do, remember, or get that the user might refer to;
- names of songs, genres, playlists, and other data associated with the user's music library that the user might refer to;
- people, places, categories, tags, labels, or other symbolic names on photos or videos or other media in the user's media library;
- titles, authors, genres, or other symbolic names in books or other literature in the user's personal library.

### Dialog History 1052

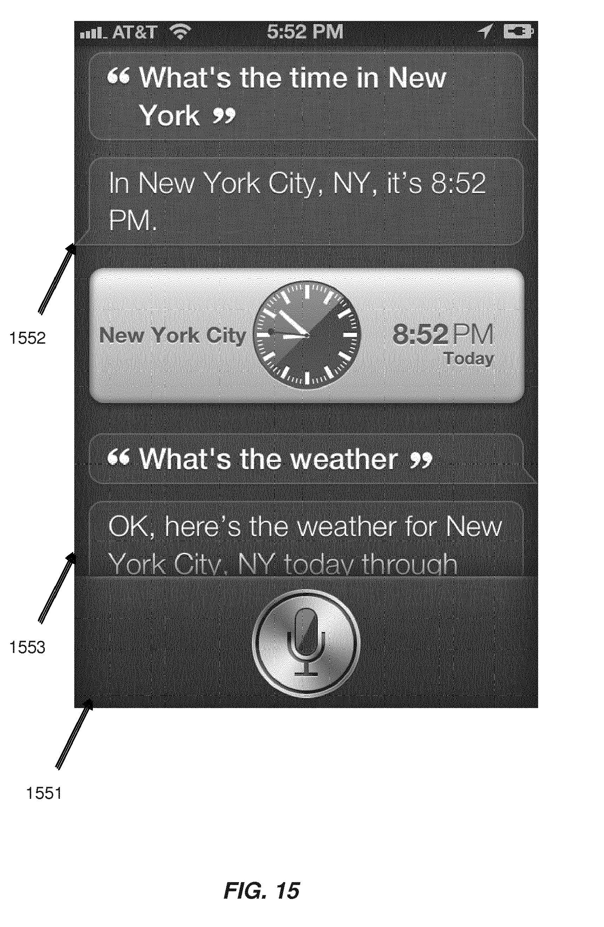

Another source of context data is the user's dialog history 1052 with virtual assistant 1002. Such history may include, for example, references to domains, people, places, and so forth. Referring now to Fig. 15, there is shown an example in which virtual assistant 1002 uses dialog context to infer the location for a command, according to one embodiment. In screen 1551, the user first asks "What's the time in New York"; virtual assistant 1002 responds 1552 by providing the current time in New York City. The user then asks "What's the weather". Virtual assistant 1002 uses the previous dialog history to infer that the location intended for the weather query is the last location mentioned in the dialog history. Therefore its response 1553 provides weather information for New York City.

As another example, if the user says "find camera shops near here" and then, after examining the results, says "how about in San Francisco?", an assistant can use the dialog context to determine that "how about" means "do the same task (find camera stores)" and "in San Francisco" means "changing the locus of the search from here to San Francisco." Virtual assistant 1002 can also use, as context, previous details of a dialog, such as previous output provided to the user. For example, if virtual assistant 1002 used a clever response intended as humor, such as "Sure thing, you're the boss", it can remember that it has already said this and can avoid repeating the phrase within a dialog session.

Examples of context information from dialog history and virtual assistant memory include, without limitation:
- people mentioned in a dialog;
- places and locations mentioned in a dialog;
- current time frame in focus;
- current application domain in focus, such as email or calendar;
- current task in focus, such as reading an email or creating a calendar entry;
- current domain objects in focus, such as an email message that was just read or calendar entry that was just created;
- current state of a dialog or transactional flow, such as whether a question is being asked and what possible answers are expected;
- history of user requests, such as "good Italian restaurants";
- history of results of user requests, such as sets of restaurants returned;
- history of phrases used by the assistant in dialog;
- facts that were told to the assistant by the user, such as "my mother is Rebecca Richards" and "I liked that restaurant".

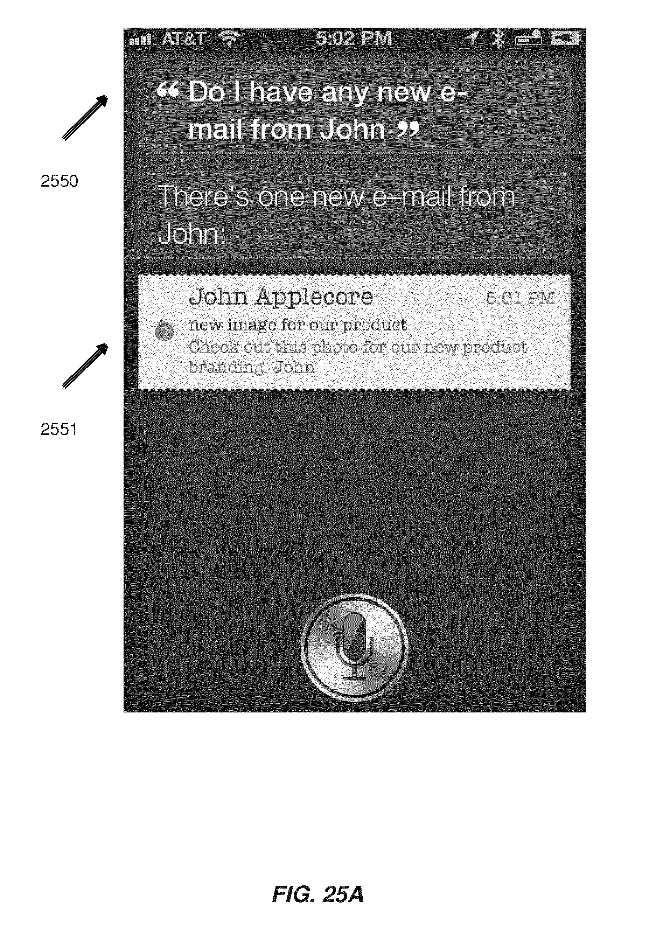

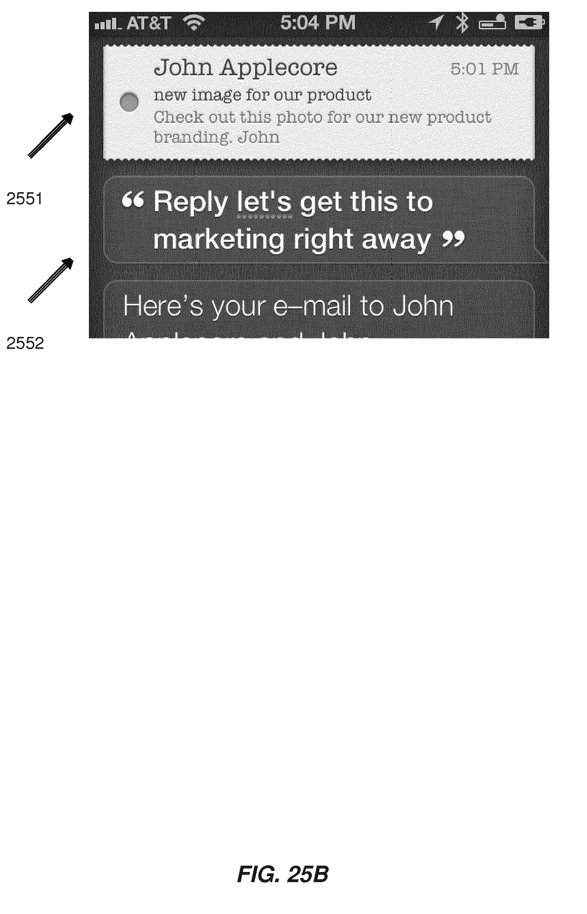

Referring now to Figs. 25A and 25B, there is shown a series of screen shots depicting an example of the use of prior dialog context, according to one embodiment. In Fig. 25A, the user has entered a request 2550 for any new e-mail from John. Virtual assistant 1002 responds by displaying an email message 2551 from John. In Fig. 25B, the user enters the command 2552 "Reply let's get this to marketing right away". Virtual assistant 1002 interprets command 2552 using prior dialog context; specifically, the command is interpreted to refer to the email message 2551 displayed in Fig. 25.

### Device Sensor Data 1056

In one embodiment, a physical device running virtual assistant 1002 may have one or more sensors. Such sensors can provide sources of contextual information. Example of such information include, without limitation:
- the user's current location;
- the local time at the user's current location;
- the position, orientation, and motion of the device;
- the current light level, temperature and other environmental measures;
- the properties of the microphones and cameras in use;
- the current networks being used, and signatures of connected networks, including Ethernet, Wi-Fi and Bluetooth. Signatures include MAC addresses of network access points, IP addresses assigned, device identifiers such as Bluetooth names, frequency channels and other properties of wireless networks.

Sensors can be of any type including for example: an accelerometer, compass, GPS unit, altitude detector, light sensor, thermometer, barometer, clock, network interface, battery test circuitry, and the like.

### Application Preferences and Usage History 1072

In one embodiment, information describing the user's preferences and settings for various applications, as well as his or her usage history 1072, are used as context for interpreting and/or operationalizing the user's intent or other functions of virtual assistant 1002. Examples of such preferences and history 1072 include, without limitation:
- shortcuts, favorites, bookmarks, friends lists, or any other collections of user data about people, companies, addresses, phone numbers, places, web sites, email messages, or any other references;
- recent calls made on the device;
- recent text message conversations, including the parties to the conversations;
- recent requests for maps or directions;
- recent web searches and URLs;
- stocks listed in a stock application;
- recent songs or video or other media played ;
- the names of alarms set on alerting applications;
- the names of applications or other digital objects on the device;
- the user's preferred language or the language in use at the user's location.

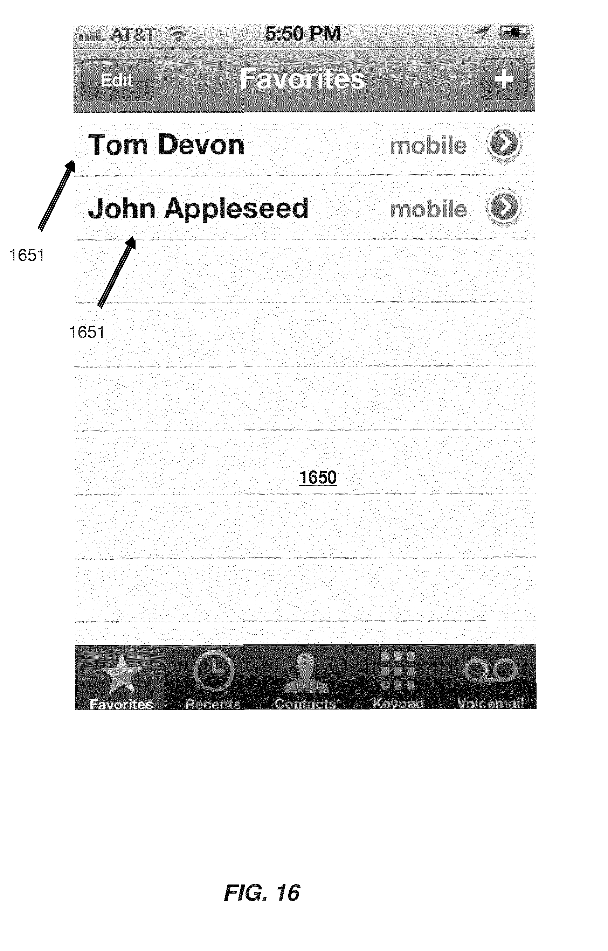

Referring now to Fig. 16, there is shown an example of the use of a telephone favorites list as a source of context, according to one embodiment. In screen 1650, a list of favorite contacts 1651 is shown. If the user provides input to "call John", this list of favorite contacts 1651 can be used to determine that "John" refers to John Appleseed's mobile number, since that number appears in the list.

### Event Context 2706

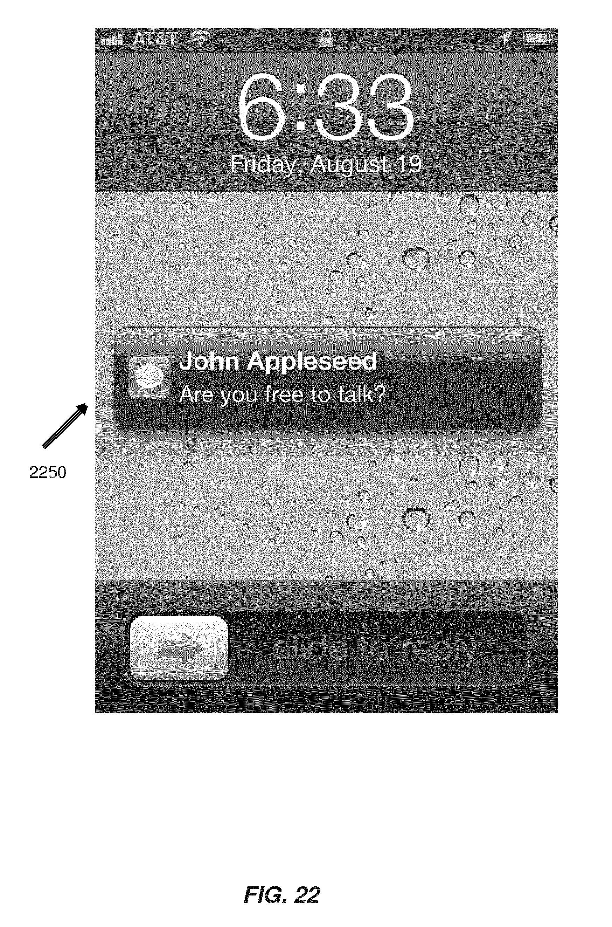

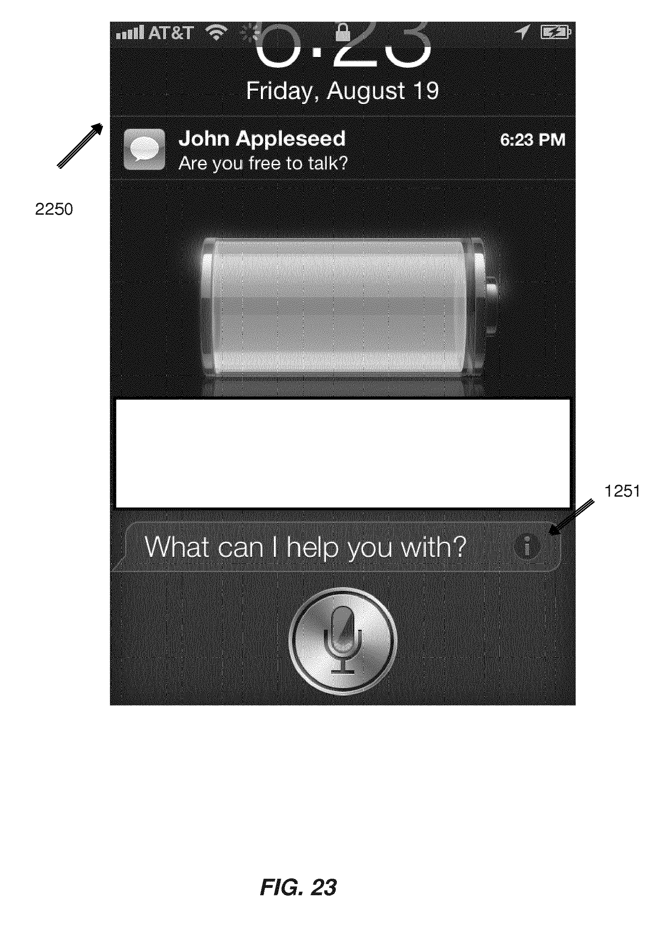

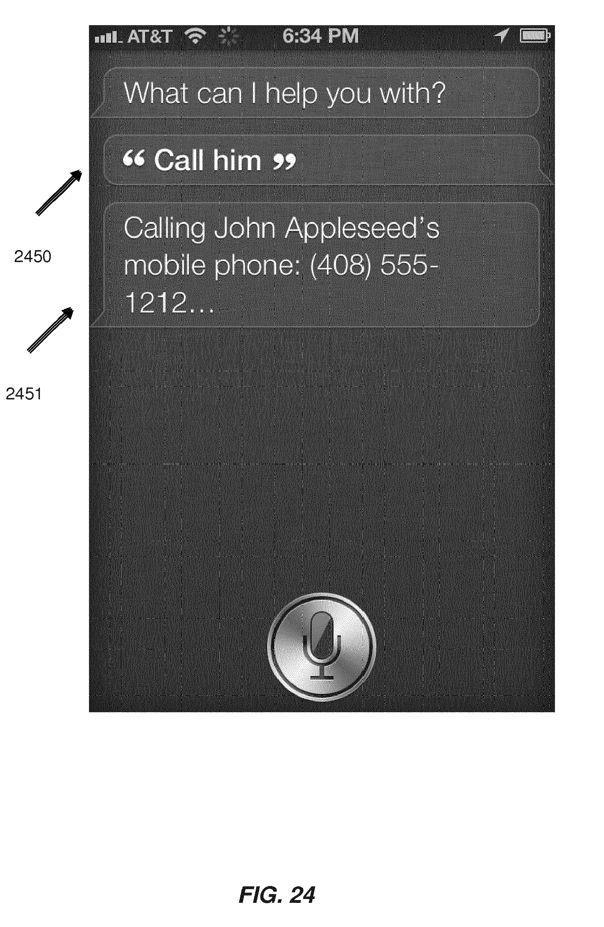

In one embodiment, virtual assistant 1002 is able to use context associated with asynchronous events that happen independently of the user's interaction with virtual assistant 1002. Referring now to Figs. 22 to 24, there is shown an example illustrating activation of virtual assistant 1002 after an event occurs that can provide event context, or alert context, according to one embodiment. In this case, the event is an incoming text message 2250, as shown in Fig. 22. In Fig. 23, virtual assistant 1002 has been invoked, and text message 2250 is shown along with prompt 1251. In Fig. 24, the user has input the command "call him" 2450. Virtual assistant 1002 uses the event context to disambiguate the command by interpreting "him" to mean the person who sent the incoming text message 2250. Virtual assistant 1002 further uses the event context to determine which telephone number to use for the outbound call. Confirmation message 2451 is displayed to indicate that the call is being placed.

Examples of alert context information include, without limitation:
- incoming text messages or pages;
- incoming email messages;
- incoming phone calls;
- reminder notifications or task alerts;
- calendar alerts;
- alarm clock, timers, or other time-based alerts;
- notifications of scores or other events from games;
- notifications of financial events such as stock price alerts;
- news flashes or other broadcast notifications;
- push notifications from any application.

### Personal Acoustic Context Data 1080

When interpreting speech input, virtual assistant 1002 can also take into account the acoustic environments in which the speech is entered. For example, the noise profiles of a quiet office are different from those of automobiles or public places. If a speech recognition system can identify and store acoustic profile data, these data can also be provided as contextual information. When combined with other contextual information such as the properties of the microphones in use, the current location, and the current dialog state, acoustic context can aid in recognition and interpretation of input.

### Representing and Accessing Context

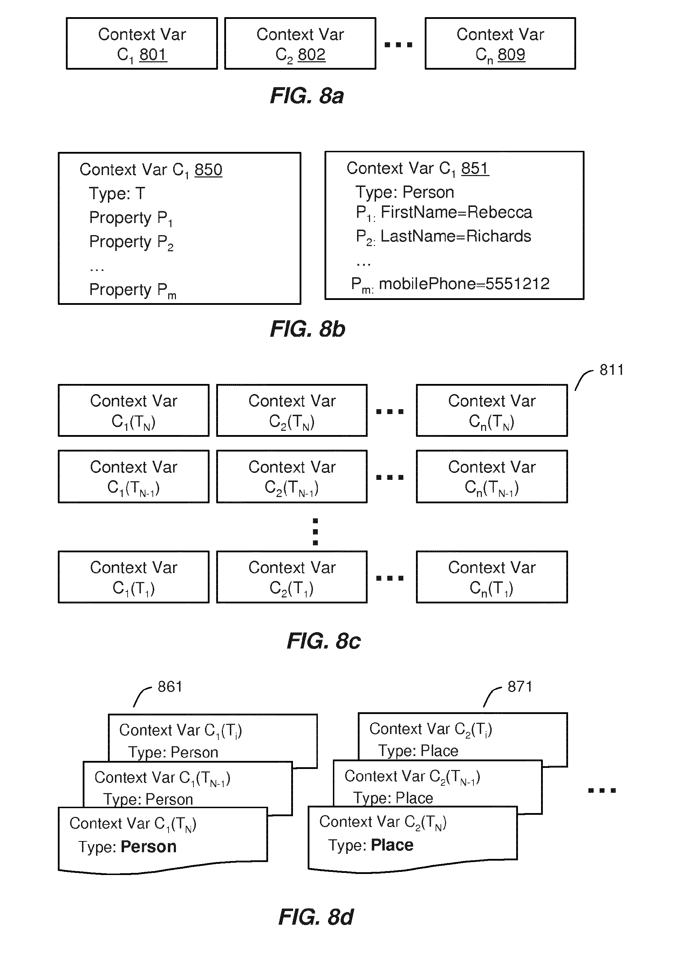

As described above, virtual assistant 1002 can use context information from any of a number of different sources. Any of a number of different mechanisms can be used for representing context so that it can be made available to virtual assistant 1002. Referring now to Figs. 8a through 8d, there are shown several examples of representations of context information as can be used in connection with various embodiments of the present invention.

### Representing People, Places, Times, Domains, Tasks, and Objects

Fig. 8a depicts examples 801-809 of context variables that represent simple properties such as geo-coordinates of the user's current location. In one embodiment, current values can be maintained for a core set of context variables. For example, there can be a current user, a current location in focus, a current time frame in focus, a current application domain in focus, a current task in focus, and a current domain object in focus. A data structure such as shown in Fig. 8a can be used for such a representation.

Fig. 8b depicts example 850 of a more complex representation that may be used for storing context information for a contact. Also shown is an example 851 of a representation including data for a contact. In one embodiment, a contact (or person) can be represented as an object with properties for name, gender, address, phone number, and other properties that might be kept in a contacts database. Similar representations can be used for places, times, application domains, tasks, domain objects, and the like.

In one embodiment, sets of current values of a given type are represented. Such sets can refer to current people, current places, current times, and the like.

In one embodiment, context values are arranged in a history, so that at iteration N there is a frame of current context values, and also a frame of context values that were current at iteration N-1, going back to some limit on the length of history desired. Fig. 8c depicts an example of an array 811 including a history of context values. Specifically, each column of Fig. 8c represents a context variable, with rows corresponding to different times.

In one embodiment, sets of typed context variables are arranged in histories as shown in Fig. 8d. In the example, a set 861 of context variables referring to persons is shown, along with another set 871 of context variables referring to places. Thus, relevant context data for a particular time in history can be retrieved and applied.

One skilled in the art will recognize that the particular representations shown in Figs. 8a through 8d are merely exemplary, and that many other mechanisms and/or data formats for representing context can be used. Examples include:
- In one embodiment, the current user of the system can be represented in some special manner, so that virtual assistant 1002 knows how to address the user and refer to the user's home, work, mobile phone, and the like.
- In one embodiment, relationships among people can be represented, allowing virtual assistant 1002 to understand references such as "my mother" or "my boss's house".
- Places can be represented as objects with properties such as names, street addresses, geo-coordinates, and the like.
- Times can be represented as objects with properties including universal time, time zone offset, resolution (such as year, month, day, hour, minute, or second). Time objects can also represent symbolic times such as "today", "this week", "this [upcoming] weekend", "next week", "Annie's birthday", and the like. Time objects can also represent durations or points of time.
- Context can also be provided in terms of an application domain representing a service or application or domain of discourse, such as email, text messaging, phone, calendar, contacts, photos, videos, maps, weather, reminders, clock, web browser, Facebook, Pandora, and so forth. The current domain indicates which of these domains is in focus.
- Context can also define one or more tasks, or operations to perform within a domain. For example, within the email domain there are tasks such as read email message, search email, compose new email, and the like.
- Domain Objects are data objects associated with the various domains. For example, the email domain operates on email messages, the calendar domain operates on calendar events, and the like.

For purposes of the description provided herein, these representations of contextual information are referred to as context variables of a given type. For example, a representation of the current user is a context variable of type Person.

### Representing Context Derivation

In one embodiment, the derivation of context variables is represented explicitly, so that it can be used in information processing. The derivation of context information is a characterization of the source and/or sets of inferences made to conclude or retrieve the information. For example, a Person context value 851 as depicted in Fig. 8b might have been derived from a Text Message Domain Object, which was acquired from Event Context 2706. This source of the context value 851 can be represented.

### Representing a History of User Requests and/or Intent

In one embodiment, a history of the user's requests can be stored. In one embodiment, a history of the deep structure representation of the user's intent (as derived from natural language processing) can be stored as well. This allows virtual assistant 1002 to make sense of new inputs in the context of previously interpreted input. For example, if the user asks "what is the weather in New York?", language interpreter 2770 might interpret the question as referring to the location of New York. If the user then says "what is it for this weekend?" virtual assistant 1002 can refer to this previous interpretation to determine that "what is it" should be interpreted to mean "what is the weather".

### Representing a History of Results

In one embodiment, a history of the results of user's requests can be stored, in the form of domain objects. For example, the user request "find me some good Italian restaurants" might return a set of domain objects representing restaurants. If the user then enters a command such as "call Amilio's", virtual assistant 1002 can search the results for restaurants named Amilio's within the search results, which is a smaller set than all possible places that can be called.

### Delayed Binding of Context Variables

In one embodiment, context variables can represent information that is retrieved or derived on demand. For example, a context variable representing the current location, when accessed, can invoke an API that retrieves current location data from a device and then does other processing to compute, for instance, a street address. The value of that context variable can be maintained for some period of time, depending on a caching policy.

### Searching Context

Virtual assistant 1002 can use any of a number of different approaches to search for relevant context information to solve information-processing problems. Example of different types of searches include, without limitation:
- **Search by context variable name.** If the name of a required context variable is known, such as "current user first name", virtual assistant 1002 can search for instances of it. If a history is kept, virtual assistant 1002 can search current values first, and then consult earlier data until a match is found.
- **Search by context variable type**. If the type of a required context variable is known, such as Person, virtual assistant 1002 can search for instances of context variables of this type. If a history is kept, virtual assistant 1002 can search current values first, and then consult earlier data until a match is found.

In one embodiment, if the current information processing problem requires a single match, the search is terminated once a match is found. If multiple matches are allowed, matching results can be retrieved in order until some limit is reached.

In one embodiment, if appropriate, virtual assistant 1002 can constrain its search to data having certain derivation. For example, if looking for People objects within a task flow for email, virtual assistant 1002 might only consider context variables whose derivation is an application associated with that domain.

In one embodiment, virtual assistant 1002 uses rules to rank matches according to heuristics, using any available properties of context variables. For example, when processing user input including a command to "tell her I'll be late", virtual assistant 1002 interprets "her" by reference to context. In doing so, virtual assistant 1002 can apply ranking to indicate a preference for People objects whose derivation is application usage histories for communication applications such as text messaging and email. As another example, when interpreting a command to "call her", virtual assistant 1002 can apply ranking to prefer People objects that have phone numbers over those whose phone numbers are not known. In one embodiment, ranking rules can be associated with domains. For example, different ranking rules can be used for ranking Person variables for Email and Phone domains. One skilled in the art will recognize that any such ranking rule(s) can be created and/or applied, depending on the particular representation and access to context information needed.

### Use of Context to Improve Virtual Assistant Processing

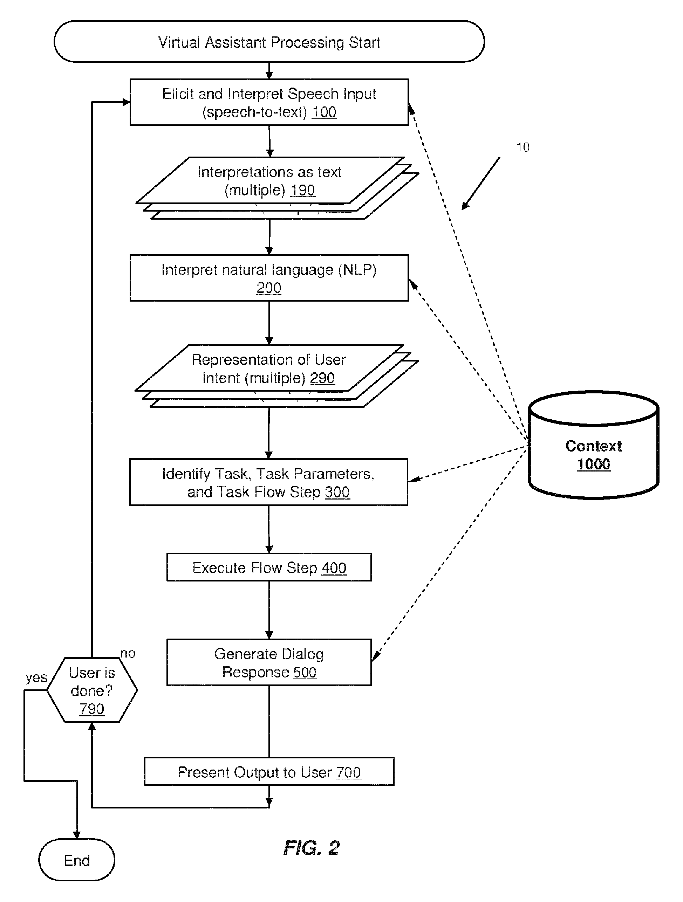

As described above, context can be applied to a variety of computations and inferences in connection with the operation of virtual assistant 1002. Referring now to Fig. 2, there is shown a flow diagram depicting a method 10 for using context at various stages of processing in virtual assistant 1002, according to one embodiment.

Method 10 may be implemented in connection with one or more embodiments of virtual assistant 1002.

In at least one embodiment, method 10 may be operable to perform and/or implement various types of functions, operations, actions, and/or other features such as, for example, one or more of the following (or combinations thereof):
- Execute an interface control flow loop of a conversational interface between the user and virtual assistant 1002. At least one iteration of method 10 may serve as a ply in the conversation. A conversational interface is an interface in which the user and assistant 1002 communicate by making utterances back and forth in a conversational manner.
- Provide executive control flow for virtual assistant 1002. That is, the procedure controls the gathering of input, processing of input, generation of output, and presentation of output to the user.
- Coordinate communications among components of virtual assistant 1002. That is, it may direct where the output of one component feeds into another, and where the overall input from the environment and action on the environment may occur.

In at least some embodiments, portions of method 10 may also be implemented at other devices and/or systems of a computer network.

According to specific embodiments, multiple instances or threads of method 10 may be concurrently implemented and/or initiated via the use of one or more processors 63 and/or other combinations of hardware and/or hardware and software. In at least one embodiment, one or more or selected portions of method 10 may be implemented at one or more client(s) 1304, at one or more server(s) 1340, and/or combinations thereof.

For example, in at least some embodiments, various aspects, features, and/or functionalities of method 10 may be performed, implemented and/or initiated by software components, network services, databases, and/or the like, or any combination thereof.

According to different embodiments, one or more different threads or instances of method 10 may be initiated in response to detection of one or more conditions or events satisfying one or more different types of criteria (such as, for example, minimum threshold criteria) for triggering initiation of at least one instance of method 10. Examples of various types of conditions or events which may trigger initiation and/or implementation of one or more different threads or instances of the method may include, but are not limited to, one or more of the following (or combinations thereof):
- a user session with an instance of virtual assistant 1002, such as, for example, but not limited to, one or more of:
   ○ a mobile device application starting up, for instance, a mobile device application that is implementing an embodiment of virtual assistant 1002;
   ○ a computer application starting up, for instance, an application that is implementing an embodiment of virtual assistant 1002;
   ○ a dedicated button on a mobile device pressed, such as a "speech input button";
   ○ a button on a peripheral device attached to a computer or mobile device, such as a headset, telephone handset or base station, a GPS navigation system, consumer appliance, remote control, or any other device with a button that might be associated with invoking assistance;
   ○ a web session started from a web browser to a website implementing virtual assistant 1002;
   ○ an interaction started from within an existing web browser session to a website implementing virtual assistant 1002, in which, for example, virtual assistant 1002 service is requested;
   ○ an email message sent to a modality server 1426 that is mediating communication with an embodiment of virtual assistant 1002;
   ○ a text message is sent to a modality server 1426 that is mediating communication with an embodiment of virtual assistant 1002;
   ○ a phone call is made to a modality server 1434 that is mediating communication with an embodiment of virtual assistant 1002;
   ○ an event such as an alert or notification is sent to an application that is providing an embodiment of virtual assistant 1002.
- when a device that provides virtual assistant 1002 is turned on and/or started.

According to different embodiments, one or more different threads or instances of method 10 may be initiated and/or implemented manually, automatically, statically, dynamically, concurrently, and/or combinations thereof. Additionally, different instances and/or embodiments of method 10 may be initiated at one or more different time intervals (e.g., during a specific time interval, at regular periodic intervals, at irregular periodic intervals, upon demand, and the like).

In at least one embodiment, a given instance of method 10 may utilize and/or generate various different types of data and/or other types of information when performing specific tasks and/or operations, including context data as described herein. Data may also include any other type of input data/information and/or output data/information. For example, in at least one embodiment, at least one instance of method 10 may access, process, and/or otherwise utilize information from one or more different types of sources, such as, for example, one or more databases. In at least one embodiment, at least a portion of the database information may be accessed via communication with one or more local and/or remote memory devices. Additionally, at least one instance of method 10 may generate one or more different types of output data/information, which, for example, may be stored in local memory and/or remote memory devices.

In at least one embodiment, initial configuration of a given instance of method 10 may be performed using one or more different types of initialization parameters. In at least one embodiment, at least a portion of the initialization parameters may be accessed via communication with one or more local and/or remote memory devices. In at least one embodiment, at least a portion of the initialization parameters provided to an instance of method 10 may correspond to and/or may be derived from the input data/information.

In the particular example of Fig. 2, it is assumed that a single user is accessing an instance of virtual assistant 1002 over a network from a client application with speech input capabilities.

Speech input is elicited and interpreted 100. Elicitation may include presenting prompts in any suitable mode. In various embodiments, the user interface of the client offers several modes of input. These may include, for example:
- an interface for typed input, which may invoke an active typed-input elicitation procedure;
- an interface for speech input, which may invoke an active speech input elicitation procedure.
- an interface for selecting inputs from a menu, which may invoke active GUI-based input elicitation.

Techniques for performing each of these are described in the above-referenced related patent applications. One skilled in the art will recognize that other input modes may be provided. The output of step 100 is a set of candidate interpretations 190 of the input speech.

The set of candidate interpretations 190 is processed 200 by language interpreter 2770 (also referred to as a natural language processor, or NLP), which parses the text input and generates a set of possible interpretations of the user's intent 290.

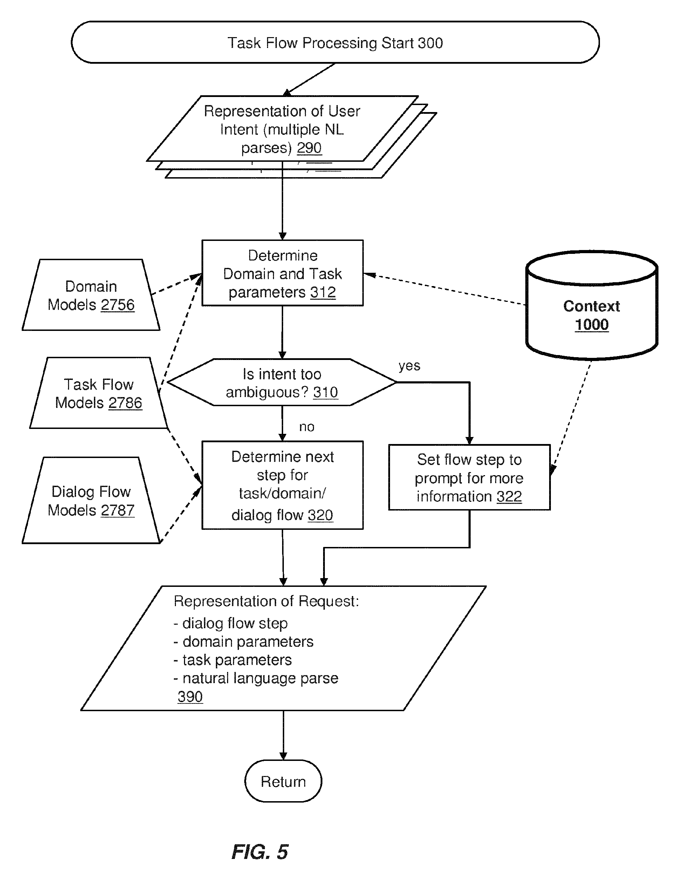

In step 300, the representation(s) of the user's intent 290 is/are passed to dialog flow processor 2780, which implements an embodiment of a dialog and flow analysis procedure as described in connection with Fig. 5. Dialog flow processor 2780 determines which interpretation of intent is most likely, maps this interpretation to instances of domain models and parameters of a task model, and determines the next flow step in a task flow.

In step 400, the identified flow step is executed. In one embodiment, invocation of the flow step is performed by services orchestration component 2782 which invokes a set of services on behalf of the user's request. In one embodiment, these services contribute some data to a common result.

In step 500 a dialog response is generated. In step 700, the response is sent to the client device for output thereon. Client software on the device renders it on the screen (or other output device) of the client device.

If, after viewing the response, the user is done 790, the method ends. If the user is not done, another iteration of the loop is initiated by returning to step 100.

Context information 1000 can be used by various components of the system at various points in method 10. For example, as depicted in Fig. 2, context 1000 can be used at steps 100, 200, 300, and 500. Further description of the use of context 1000 in these steps is provided below. One skilled in the art will recognize, however, that the use of context information is not limited to these specific steps, and that the system can use context information at other points as well, without departing from the essential characteristics of the present invention.

In addition, one skilled in the art will recognize that different embodiments of method 10 may include additional features and/or operations than those illustrated in the specific embodiment depicted in Fig. 2, and/or may omit at least a portion of the features and/or operations of method 10 as illustrated in the specific embodiment of Fig. 2.

### Use of Context in Speech Elicitation and Interpretation

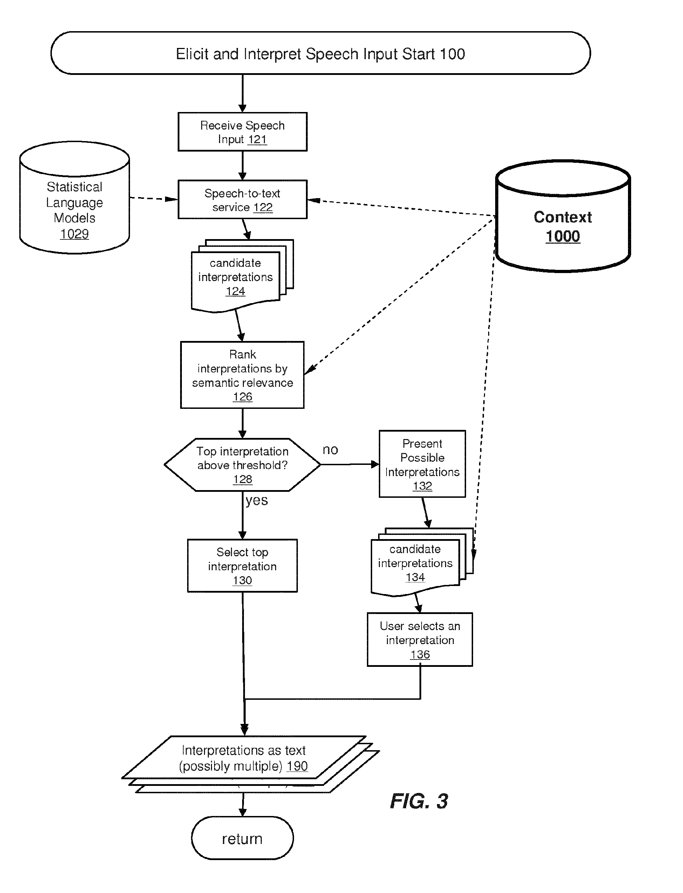

Referring now to Fig. 3, there is shown a flow diagram depicting a method for using context in speech elicitation and interpretation 100, so as to improve speech recognition according to one embodiment. Context 1000 can be used, for example, for disambiguation in speech recognition to guide the generation, ranking, and filtering of candidate hypotheses that match phonemes to words. Different speech recognition systems use various mixes of generation, rank, and filter, but context 1000 can apply in general to reduce the hypothesis space at any stage.

The method begins 100. Assistant 1002 receives 121 voice or speech input in the form of an auditory signal. A speech-to-text service 122 or processor generates a set of candidate text interpretations 124 of the auditory signal. In one embodiment, speech-to-text service 122 is implemented using, for example, Nuance Recognizer, available from Nuance Communications, Inc. of Burlington, Massachusetts.

In one embodiment, assistant 1002 employs statistical language models 1029 to generate candidate text interpretations 124 of speech input 121. In one embodiment context 1000 is applied to bias the generation, filtering, and/or ranking of candidate interpretations 124 generated by speech-to-text service 122. For example:
- Speech-to-text service 122 can use vocabulary from user personal database(s) 1058 to bias statistical language models 1029.
- Speech-to-text service 122 can use dialog state context to select a custom statistical language model 1029. For example, when asking a yes/no question, a statistical language model 1029 can be selected that biases toward hearing these words.
- Speech-to-text service 122 can use current application context to bias toward relevant words. For example "call her" can be preferred over "collar" in a text message application context, since such a context provides Person Objects that can be called.

For example, a given speech input might lead speech-to-text service 122 to generate interpretations "call her" and "collar". Guided by statistical language models (SLMs) 1029, speech-to-text service 122 can be tuned by grammatical constraints to hear names after it hears "call". Speech-to-text service 122 can be also tuned based on context 1000. For example, if "Herb" is a first name in the user's address book, then this context can be used to lower the threshold for considering "Herb" as an interpretation of the second syllable. That is, the presence of names in the user's personal data context can influence the choice and tuning of the statistical language model 1029 used to generate hypotheses. The name "Herb" can be part of a general SLM 1029 or it can be added directly by context 1000. In one embodiment, it can be added as an additional SLM 1029, which is tuned based on context 1000. In one embodiment, it can be a tuning of an existing SLM 1029, which is tuned based on context 1000.

In one embodiment, statistical language models 1029 are also tuned to look for words, names, and phrases from application preferences and usage history 1072 and/or personal databases 1058, which may be stored in long-term personal memory 2754. For example, statistical language models 1029 can be given text from to-do items, list items, personal notes, calendar entries, people names in contacts/address books, email addresses, street or city names mentioned in contact/address books, and the like.

A ranking component analyzes candidate interpretations 124 and ranks 126 them according to how well they fit syntactic and/or semantic models of virtual assistant 1002. Any sources of constraints on user input may be used. For example, in one embodiment, assistant 1002 may rank the output of the speech-to-text interpreter according to how well the interpretations parse in a syntactic and/or semantic sense, a domain model, task flow model, and/or dialog model, and/or the like: it evaluates how well various combinations of words in candidate interpretations 124 would fit the concepts, relations, entities, and properties of an active ontology and its associated models, as described in above-referenced related U.S. utility applications.

Ranking 126 of candidate interpretations can also be influenced by context 1000. For example, if the user is currently carrying on a conversation in a text messaging application when virtual assistant 1002 is invoked, the phrase "call her" is more likely to be a correct interpretation than the word "collar", because there is a potential "her" to call in this context. Such bias can be achieved by tuning the ranking of hypotheses 126 to favor phrases such as "call her" or "call <contact name>" when the current application context indicates an application that can provide "callable entities".

In various embodiments, algorithms or procedures used by assistant 1002 for interpretation of text inputs, including any embodiment of the natural language processing procedure shown in Fig. 3, can be used to rank and score candidate text interpretations 124 generated by speech-to-text service 122.

Context 1000 can also be used to filter candidate interpretations 124, instead of or in addition to constraining the generation of them or influencing the ranking of them. For example, a filtering rule could prescribe that the context of the address book entry for "Herb" sufficiently indicates that the phrase containing it should be considered a top candidate 130, even if it would otherwise be below a filtering threshold. Depending on the particular speech recognition technology being used, constraints based on contextual bias can be applied at the generation, rank, and/or filter stages.

In one embodiment, if ranking component 126 determines 128 that the highest-ranking speech interpretation from interpretations 124 ranks above a specified threshold, the highest-ranking interpretation may be automatically selected 130. If no interpretation ranks above a specified threshold, possible candidate interpretations of speech 134 are presented 132 to the user. The user can then select 136 among the displayed choices.

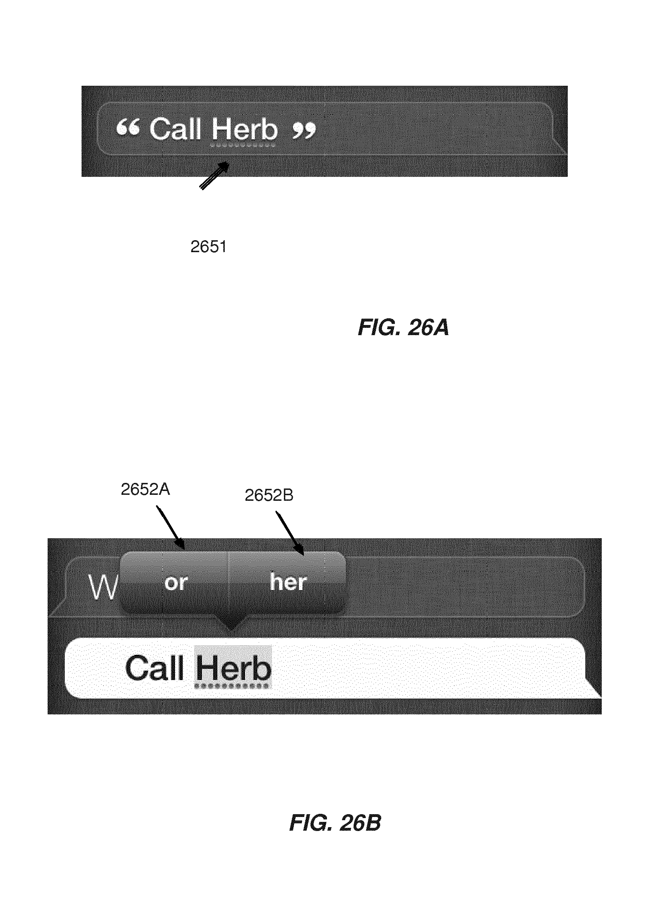

Referring now also to Figs. 26A and 26B, there are shown screen shots depicting an example of a user interface for selecting among candidate interpretations, according to one embodiment. Fig. 26A shows a presentation of the user's speech with dots underlying an ambiguous interpretation 2651. If the user taps on the text, it shows alternative interpretations 2652A, 2652B as depicted in Fig. 26B. In one embodiment, context 1000 can influence which of the candidate interpretations 2652A, 2652B is a preferred interpretation (which is shown as an initial default as in Fig. 26A) and also the selection of a finite set of alternatives to present as in Fig. 26B.

In various embodiments, user selection 136 among the displayed choices can be achieved by any mode of input, including for example multimodal input. Such input modes include, without limitation, actively elicited typed input, actively elicited speech input, actively presented GUI for input, and/or the like. In one embodiment, the user can select among candidate interpretations 134, for example by tapping or speaking. In the case of speaking, the possible interpretation of the new speech input is highly constrained by the small set of choices offered 134.

Whether input is automatically selected 130 or selected 136 by the user, the resulting one or more text interpretation(s) 190 is/are returned. In at least one embodiment, the returned input is annotated, so that information about which choices were made in step 136 is preserved along with the textual input. This enables, for example, the semantic concepts or entities underlying a string to be associated with the string when it is returned, which improves accuracy of subsequent language interpretation.

Any of the sources described in connection with Fig. 1 can provide context 1000 to the speech elicitation and interpretation method depicted in Fig. 3. For example:
- Personal Acoustic Context Data 1080 be used to select from possible SLMs 1029 or otherwise tune them to optimize for recognized acoustical contexts.
- Device Sensor Data 1056, describing properties of microphones and/or cameras in use, can be used to select from possible SLMs 1029 or otherwise tune them to optimize for recognized acoustical contexts.
- Vocabulary from personal databases 1058 and application preferences and usage history 1072 can be used as context 1000. For example, the titles of media and names of artists can be used to tune language models 1029.
- Current dialog state, part of dialog history and assistant memory 1052, can be used to bias the generate/filter/rank of candidate interpretations 124 by text-to-speech service 122. For example, one kind of dialog state is asking a yes/no question. When in such a state, procedure 100 can select an SLM 1029 that biases toward hearing these words, or it can bias the ranking and filtering of these words in a context-specific tuning at 122.

### Use of Context in Natural Language Processing

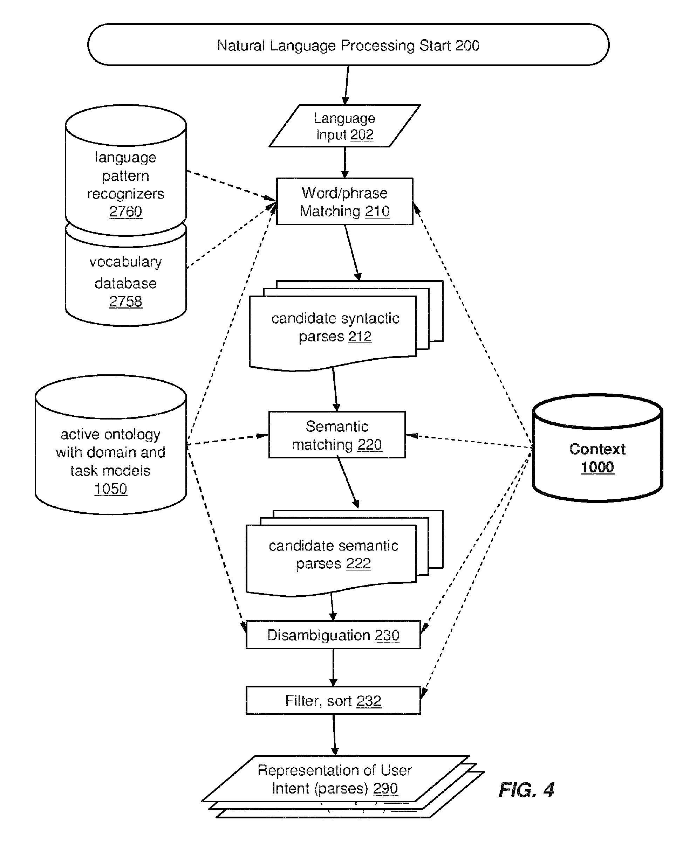

Context 1000 can be used to facilitate natural language processing (NLP) - the parsing of text input into semantic structures representing the possible parses. Referring now to Fig. 4, there is shown a flow diagram depicting a method for using context in natural language processing as may be performed by language interpreter 2770, according to one embodiment.

The method begins 200. Input text 202 is received. In one embodiment, input text 202 is matched 210 against words and phrases using pattern recognizers 2760, vocabulary databases 2758, ontologies and other models 1050, so as to identify associations between user input and concepts. Step 210 yields a set of candidate syntactic parses 212, which are matched for semantic relevance 220 producing candidate semantic parses 222. Candidate parses are then processed to remove ambiguous alternatives at 230, filtered and sorted by relevance 232, and returned.

Throughout natural language processing, contextual information 1000 can be applied to reduce the hypothesis space and constrain possible parses. For example, if language interpreter 2770 receives two candidates "call her" and "call Herb" to, then language interpreter 2770 would find bindings 212 for the words "call", "her", and "Herb". Application context 1060 can be used to constrain the possible word senses for "call" to mean "phone call". Context can also be used to find the referents for "her" and "Herb". For "her", the context sources 1000 could be searched for a source of callable entities. In this example, the party to a text messaging conversation is a callable entity, and this information is part of the context coming from the text messaging application. In the case of "Herb", the user's address book is a source of disambiguating context, as are other personal data such as application preferences (such as favorite numbers from domain entity databases 2772) and application usage history (such as recent phone calls from domain entity databases 2772). In an example where the current text messaging party is RebeccaRichards and there is a HerbGowen in the user's address book, the two parses created by language interpreter 2770 would be semantic structures representing "PhoneCall(RebeccaRichards)" and "PhoneCall (HerbGowen)".

Data from application preferences and usage history 1072, dialog history and assistant memory 1052, and/or personal databases 1058 can also be used by language interpreter 2770 in generating candidate syntactic parses 212. Such data can be obtained, for example, from short- and/or long-term memory 2752, 2754. In this manner, input that was provided previously in the same session, and/or known information about the user, can be used to improve performance, reduce ambiguity, and reinforce the conversational nature of the interaction. Data from active ontology 1050, domain models 2756, and task flow models 2786 can also be used, to implement evidential reasoning in determining valid candidate syntactic parses 212.

In semantic matching 220, language interpreter 2770 considers combinations of possible parse results according to how well they fit semantic models such as domain models and databases. Semantic matching 220 may use data from, for example, active ontology 1050, short term personal memory 2752, and long term personal memory 2754. For example, semantic matching 220 may use data from previous references to venues or local events in the dialog (from dialog history and assistant memory 1052) or personal favorite venues (from application preferences and usage history 1072). Semantic matching 220 step also uses context 1000 to interpret phrases into domain intent structures. A set of candidate, or potential, semantic parse results is generated 222.

In disambiguation step 230, language interpreter 2770 weighs the evidential strength of candidate semantic parse results 222. Disambiguation 230 involves reducing the number of candidate semantic parse 222 by eliminating unlikely or redundant alternatives. Disambiguation 230 may use data from, for example, the structure of active ontology 1050. In at least one embodiment, the connections between nodes in an active ontology provide evidential support for disambiguating among candidate semantic parse results 222. In one embodiment, context 1000 is used to assist in such disambiguation. Examples of such disambiguation include: determining one of several people having the same name; determining a referent to a command such as "reply" (email or text message); pronoun dereferencing; and the like.

For example, input such as "call Herb" potentially refers to any entity matching "Herb". There could be any number of such entities, not only in the user's address book (personal databases 1058) but also in databases of names of businesses from personal databases 1058 and/or domain entity databases 2772. Several sources of context can constrain the set of matching "Herbs", and/or rank and filter them in step 232. For example:
- Other Application Preferences and Usage history 1072, such as a Herb who is on a favorite phone numbers list, or recently called, or recently party to a text message conversation or email thread;
- Herb mentioned in personal databases 1058, such as a Herb who is named as relationship, such as father or brother, or listed participant in a recent calendar event. If the task were playing media instead of phone calling, then the names from media titles, creators, and the like would be sources of constraint;
- A recent ply of a dialog 1052, either in request or results. For example, as described above in connection with Figs. 25A to 25B, after searching for email from John, with the search result still in the dialog context, the user can compose a reply. Assistant 1002 can use the dialog context to identify the specific application domain object context.

Context 1000 can also help reduce the ambiguity in words other than proper names. For example, if the user of an email application tells assistant 1002 to "reply" (as depicted in Fig. 20), the context of the application helps determine that the word should be associated with EmailReply as opposed to TextMessagingReply.

In step 232, language interpreter 2770 filters and sorts 232 the top semantic parses as the representation of user intent 290. Context 1000 can be used to inform such filtering and sorting 232. The result is a representation of user intent 290.

### Use of Context in Task Flow Processing

Referring now to Fig. 5, there is shown a flow diagram depicting a method for using context in task flow processing as may be performed by dialog flow processor 2780, according to one embodiment. In task flow processing, candidate parses generated from the method of Fig. 4 are ranked and instantiated to produce operational task descriptions that can be executed.

The method begins 300. Multiple candidate representations of user intent 290 are received. As described in connection with Fig. 4, in one embodiment, representations of user intent 290 include a set of semantic parses.

In step 312, dialog flow processor 2780 determines the preferred interpretation of the semantic parse(s) with other information to determine a task to perform and its parameters, based on a determination of the user's intent. Information may be obtained, for example, from domain models 2756, task flow models 2786, and/or dialog flow models 2787, or any combination thereof. For example, a task might be PhoneCall and a task parameter is the PhoneNumber to call.

In one embodiment, context 1000 is used in performing step 312, to guide the binding of parameters 312 by inferring default values and resolving ambiguity. For example, context 1000 can guide the instantiation of the task descriptions and determining whether there is a best interpretation of the user's intent.

For example, assume the intent inputs 290 are PhoneCall(RebeccaRichards)" and "PhoneCall (HerbGowen)". The PhoneCall task requires parameter PhoneNumber. Several sources of context 100 can be applied to determine which phone number for Rebecca and Herb would work. In this example, the address book entry for Rebecca in a contacts database has two phone numbers and the entry for Herb has no phone numbers but one email address. Using the context information 1000 from personal databases 1058 such as the contacts database allows virtual assistant 1002 to prefer Rebecca over Herb, since there is a phone number for Rebecca and none for Herb. To determine which phone number to use for Rebecca, application context 1060 can be consulted to choose the number that is being used to carry on text messaging conversation with Rebecca. Virtual assistant 1002 can thus determine that "call her" in the context of a text messaging conversation with Rebecca Richards means make a phone call to the mobile phone that Rebecca is using for text messaging. This specific information is returned in step 390.

Context 1000 can be used for more than reducing phone number ambiguity. It can be used whenever there are multiple possible values for a task parameter, as long as any source of context 1000 having values for that parameter is available. Other examples in which context 1000 can reduce the ambiguity (and avoid having to prompt the user to select among candidates) include, without limitation: email addresses; physical addresses; times and dates; places; list names; media titles; artist names; business names; or any other value space.

Other kinds of inferences required for task flow processing 300 can also benefit from context 1000. For example, default value inference can use the current location, time, and other current values. Default value inference is useful for determining the values of task parameters that are implicit in the user's request. For example, if someone says "what is the weather like?" they implicitly mean what is the current weather like around here.

In step 310, dialog flow processor 2780 determines whether this interpretation of user intent is supported strongly enough to proceed, and/or if it is better supported than alternative ambiguous parses. If there are competing ambiguities or sufficient uncertainty, then step 322 is performed, to set the dialog flow step so that the execution phase causes the dialog to output a prompt for more information from the user. An example of a screen shot for prompting the user to resolve an ambiguity is shown in Fig. 14. Context 1000 can be used in step 322 in sorting and annotating the displayed menu of candidate items for the user to choose from.

In step 320, the task flow model is consulted to determine an appropriate next step. Information may be obtained, for example, from domain models 2756, task flow models 2786, and/or dialog flow models 2787, or any combination thereof.

The result of step 320 or step 322 is a representation of the user's request 390, which may include the task parameters sufficient for dialog flow processor 2780 and services orchestration 2782 to dispatch to the appropriate service.

### Use of Context to Improve Dialog Generation

During dialog response generation 500, assistant 1002 may paraphrase back its understanding of the user's intent and how it is being operationalized in a task. An example of such output is "OK, I'll call Rebecca on her mobile..." This allows the user to authorize assistant 1002 to perform the associated task automation, such as placing a call. In dialog generation step 500, assistant 1002 determines how much detail to convey back to the user in paraphrasing its understanding of the user's intent.

In one embodiment, context 1000 can also be used to guide selection of the appropriate level of detail in the dialog, as well as to filter based on previous output (so as to avoid repeating information). For example, assistant 1002 can use the knowledge that the person and phone number were inferred from context 1000 to determine whether to mention the name and phone number and in what level of detail. Examples of rules that can be applied include, without limitation:
- When a pronoun is resolved by context, mention the person to call by name.
- When a person is inferred from a familiar context such as text messaging, use only the first name.
- When a phone number is inferred from application or personal data context, use the symbolic name of the phone number such as "mobile phone" rather than the actual number to dial.

In addition to guiding the appropriate level of detail, context 1000 can also be used in dialog generation step 500, for example, to filter previous utterances, so as to avoid repetition, and to refer to previously mentioned entities in the conversation.

One skilled in the art will recognize that context 1000 can also be used in other ways. For example, in connection with the techniques described herein, context 1000 can be used according to mechanisms described in related U.S. Utility Application Serial No. 12/479,477 for "Contextual Voice Commands", attorney docket number P7393US1, filed June 5, 2009, the entire disclosure of which is incorporated herein by reference.

### Context Gathering and Communication Mechanisms

In various embodiments, different mechanisms are used for gathering and communicating context information in virtual assistant 1002. For example, in one embodiment, wherein virtual assistant 1002 is implemented in a client/server environment so that its services are distributed between the client and the server, sources of context 1000 may also be distributed.

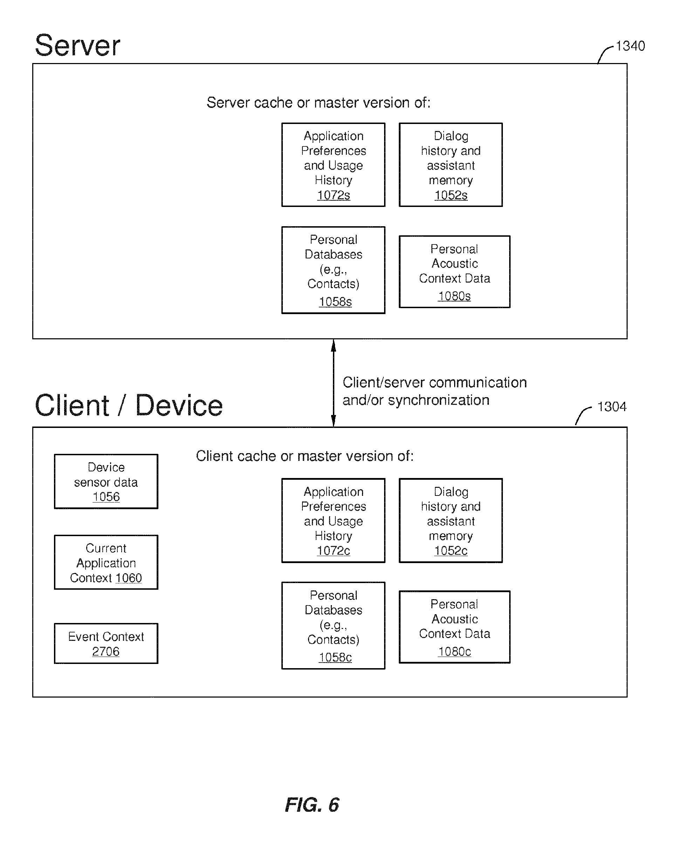

Referring now to Fig. 6, there is shown an example of distribution of sources of context 1000 between client 1304 and server 1340 according to one embodiment. Client device 1304, which may be a mobile computing device or other device, can be the source of contextual information 1000 such as device sensor data 1056, current application context 1060, event context 2706, and the like. Other sources of context 1000 can be distributed on client 1304 or server 1340, or some combination of both. Examples include application preferences and usage history 1072c, 1072s; dialog history and assistant memory 1052c, 1052s; personal databases 1058c, 1058s; and personal acoustic context data 1080c, 1080s. In each of these examples, sources of context 1000 may exist on server 1340, on client 1304, or on both. Furthermore, as described above, the various steps depicted in Fig. 2 can be performed by client 1304 or server 1340, or some combination of both.

In one embodiment, context 1000 can be communicated among distributed components such as client 1304 and server 1340. Such communication can be over a local API or over a distributed network, or by some other means.

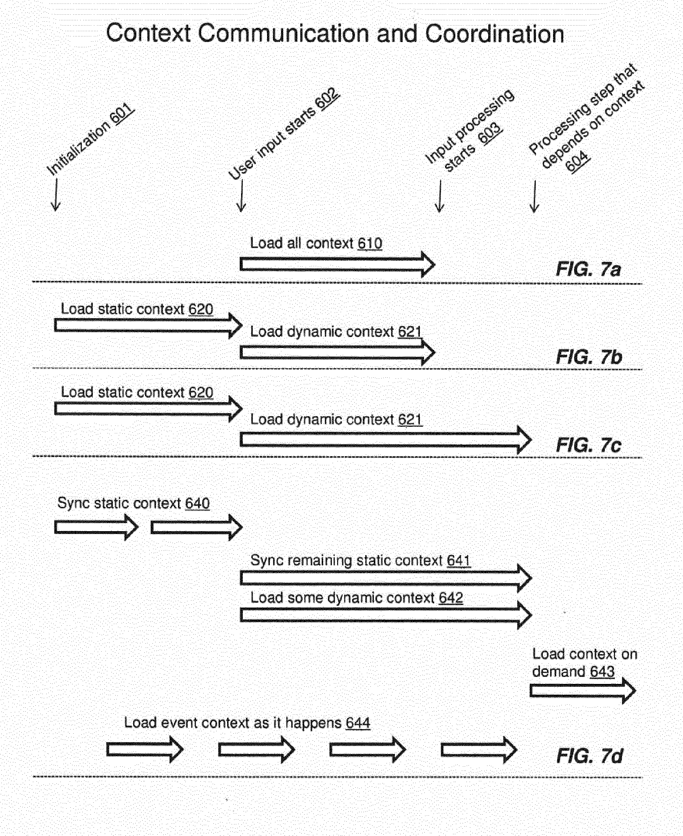

Referring now to Figs. 7a through 7d, there are shown event diagrams depicting examples of mechanisms for obtaining and coordinating context information 1000 according to various embodiments. Various techniques exist for loading, or communicating, context so that it is available to virtual assistant 1002 when needed or useful. Each of these mechanisms is described in terms of four events that can place with regard to operation of virtual assistant 1002: device or application initialization 601; initial user input 602; initial input processing 603, and context-dependent processing 604.

Fig. 7a depicts an approach in which context information 1000 is loaded using a "pull" mechanism once user input has begun 602. Once user invokes virtual assistant 1002 and provides at least some input 602, virtual assistant 1002 loads 610 context 1000. Loading 610 can be performed by requesting or retrieving context information 1000 from an appropriate source. Input processing 603 starts once context 1000 has been loaded 610.

Fig. 7b depicts an approach in which some context information 1000 is loaded 620 when a device or application is initialized 601; additional context information 1000 is loaded using a pull mechanism once user input has begun 602. In one embodiment, context information 1000 that is loaded 620 upon initialization can include static context (i.e., context that does not change frequently); context information 1000 that is loaded 621 once user input starts 602 includes dynamic context (i.e., context that may have changed since static context was loaded 620). Such an approach can improve performance by removing the cost of loading static context information 1000 from the runtime performance of the system.

Fig. 7c depicts a variation of the approach of Fig. 7b. In this example, dynamic context information 1000 is allowed to continue loading 621 after input processing begins 603. Thus, loading 621 can take place in parallel with input processing. Virtual assistant 1002 procedure is only blocked at step 604 when processing depends on received context information 1000.

Fig. 7d depicts a fully configurable version, which handles context in any of up to five different ways:
- Static contextual information 1000 is synchronized 640 in one direction, from context source to the environment or device that runs virtual assistant 1002. As data changes in the context source, the changes are pushed to virtual assistant 1002. For example, an address book might be synchronized to virtual assistant 1002 when it is initially created or enabled. Whenever the address book is modified, changes are pushed to the virtual assistant 1002, either immediately or in a batched approach. As depicted in Fig. 7d, such synchronization 640 can take place at any time, including before user input starts 602.
- In one embodiment, when user input starts 602, static context sources can be checked for synchronization status. If necessary, a process of synchronizing remaining static context information 1000 is begun 641.
- When user input starts 602, some dynamic context 1000 is loaded 642, as it was in 610 and 621 Procedures that consume context 1000 are only blocked to wait for the as-yet unloaded context information 1000 they need.
- Other context information 1000 is loaded on demand 643 by processes when they need it.
- Event context 2706 is sent 644 from source to the device running virtual assistant 1002 as events occur. Processes that consume event context 2706 only wait for the cache of events to be ready, and can proceed without blocking any time thereafter. Event context 2706 loaded in this manner may include any of the following:
   - Event context 2706 loaded before user input starts 602, for example unread message notifications. Such information can be maintained, for example, using a synchronized cache.
   - Event context 2706 loaded concurrently with or after user input has started 602. For an example, while the user is interacting with virtual assistant 1002, a text message may arrive; the event context that notifies assistant 1002 of this event can be pushed in parallel with assistant 1002 processing.

In one embodiment, flexibility in obtaining and coordinating context information 1000 is accomplished by prescribing, for each source of context information 1000, a communication policy and an access API that balances the cost of communication against the value of having the information available on every request. For example, variables that are relevant to every speech-to-text request, such as personal acoustic context data 1080 or device sensor data 1056 describing parameters of microphones, can be loaded on every request. Such communication policies can be specified, for example, in a configuration table.

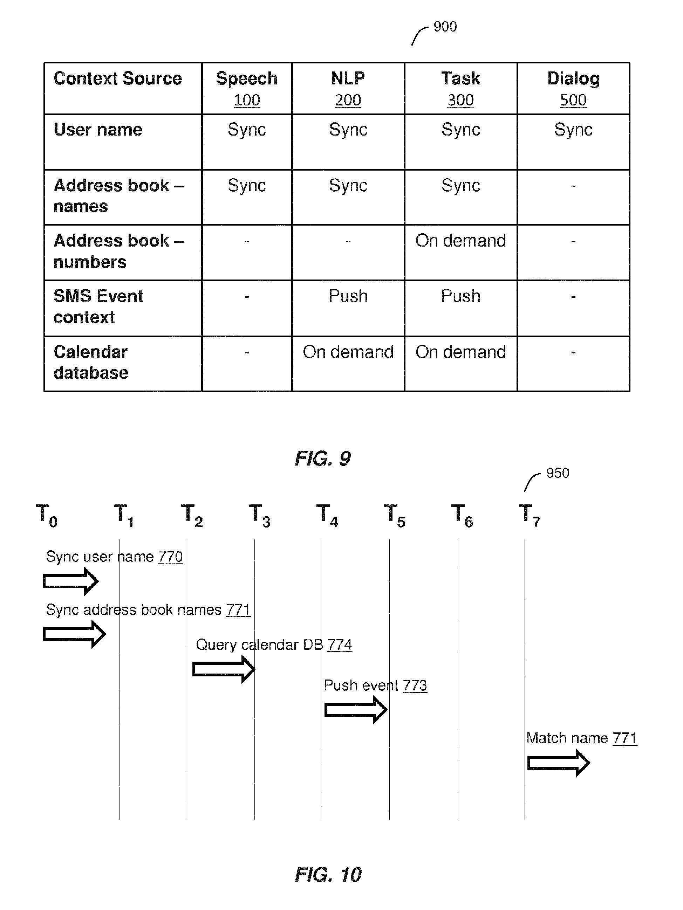

Referring now to Fig. 9, there is shown an example of a configuration table 900 that can be used for specifying communication and caching policies for various sources of context information 1000, according to one embodiment. For each of a number of different context sources, including user name, address book names, address book numbers, SMS event context, and calendar database, a particular type of context loading is specified for each of the steps of Fig. 2: elicit and interpret speech input 100, interpret natural language 200, identify task 300, and generate dialog response 500. Each entry in table 900 indicates one of the following:
- Sync: context information 1000 is synchronized on the device;
- On demand: context information 1000 is provided in response to virtual assistant's 1002 request for it;
- Push: context information 1000 is pushed to the device.

The fully configurable method allows a large space of potentially relevant contextual information 1000 to be made available to streamline the natural language interaction between human and machine. Rather than loading all of this information all of the time, which could lead to inefficiencies, some information is maintained in both the context source and virtual assistant 1002, while other information is queried on demand. For example, as described above, information such as names used in real time operations such as speech recognition is maintained locally, while information that is only used by some possible requests such as a user's personal calendar is queried on demand. Data that cannot be anticipated at the time of a user's invoking the assistant such as incoming SMS events are pushed as they happen.

Referring now to Fig. 10, there is shown an event diagram 950 depicting an example of accessing the context information sources configured in Fig. 9 during the processing of an interaction sequence in which assistant 1002 is in dialog with a user, according to one embodiment.

The sequence depicted in Fig. 10 represents the following interaction sequence:
- T₁: Assistant 1002: "Hello Steve, what I can I do for you?"
- T_{2:} User: "When is my next meeting?"
- T₃: Assistant 1002: "Your next meeting is at 1:00pm in the boardroom."
- T₄: [Sound of incoming SMS message]
- T₅: User: "Read me that message."
- T₆: Assistant 1002: "Your message from Johnny says 'How about lunch"'
- T₇: User: "Tell Johnny I can't make it today."
- T₈: Assistant 1002: "OK, I'll tell him."

At time T₀, before the interaction begins, user name is synched 770 and address book names are synched 771. These are examples of static context loaded at initialization time, as shown in element 640 of Fig. 7d. This allows assistant 1002 to refer to the user by his first name ("Steve").

At time T₁, synching steps 770 and 771 are complete. At time T₂, the user speaks a request, which is processed according to steps 100, 200, and 300 of Fig. 2. In task identification step 300, virtual assistant 1002 queries 774 user's personal database 1058 as a source of context 1000: specifically, virtual assistant 1002 requests information from the user's calendar database, which is configured for on demand access according to table 900. At time T₃, step 500 is performed and a dialog response is generated.

At time T₄, an SMS message is received; this is an example of event context 2706. Notification of the event is pushed 773 to virtual assistant 1002, based on the configuration in table 900.

At time T₅, the user asks virtual assistant 1002 to read the SMS message. The presence of the event context 2706 guides the NLP component in performing step 200, to interpret "that message" as a new SMS message. At time T₆, step 300 can be performed by the task component to invoke an API to read the SMS message to the user. At time T₇, the user makes request with an ambiguous verb ("tell") and name ("Johnny"). The NLP component interprets natural language 200 by resolving these ambiguities using various sources of context 1000 including the event context 2706 received in step 773; this tells the NLP component that the command refers to an SMS message from a person named Johnny. At step T₇ execute flow step 400 is performed, including matching the name 771 by looking up the number to use from the received event context object. Assistant 1002 is thus able to compose a new SMS message and send it to Johnny, as confirmed in step T₈.

The present invention has been described in particular detail with respect to possible embodiments. Those of skill in the art will appreciate that the invention may be practiced in other embodiments. First, the particular naming of the components, capitalization of terms, the attributes, data structures, or any other programming or structural aspect is not mandatory or significant, and the mechanisms that implement the invention or its features may have different names, formats, or protocols. Further, the system may be implemented via a combination of hardware and software, as described, or entirely in hardware elements, or entirely in software elements. Also, the particular division of functionality between the various system components described herein is merely exemplary, and not mandatory; functions performed by a single system component may instead be performed by multiple components, and functions performed by multiple components may instead be performed by a single component.

In various embodiments, the present invention can be implemented as a system or a method for performing the above-described techniques, either singly or in any combination. In another embodiment, the present invention can be implemented as a computer program product comprising a nontransitory computer-readable storage medium and computer program code, encoded on the medium, for causing a processor in a computing device or other electronic device to perform the above-described techniques.

Reference in the specification to "one embodiment" or to "an embodiment" means that a particular feature, structure, or characteristic described in connection with the embodiments is included in at least one embodiment of the invention. The appearances of the phrase "in one embodiment" in various places in the specification are not necessarily all referring to the same embodiment.

Some portions of the above are presented in terms of algorithms and symbolic representations of operations on data bits within a memory of a computing device. These algorithmic descriptions and representations are the means used by those skilled in the data processing arts to most effectively convey the substance of their work to others skilled in the art. An algorithm is here, and generally, conceived to be a self-consistent sequence of steps (instructions) leading to a desired result. The steps are those requiring physical manipulations of physical quantities. Usually, though not necessarily, these quantities take the form of electrical, magnetic or optical signals capable of being stored, transferred, combined, compared and otherwise manipulated. It is convenient at times, principally for reasons of common usage, to refer to these signals as bits, values, elements, symbols, characters, terms, numbers, or the like. Furthermore, it is also convenient at times, to refer to certain arrangements of steps requiring physical manipulations of physical quantities as modules or code devices, without loss of generality.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "displaying" or "determining" or the like, refer to the action and processes of a computer system, or similar electronic computing module and/or device, that manipulates and transforms data represented as physical (electronic) quantities within the computer system memories or registers or other such information storage, transmission or display devices.

Certain aspects of the present invention include process steps and instructions described herein in the form of an algorithm. It should be noted that the process steps and instructions of the present invention can be embodied in software, firmware and/or hardware, and when embodied in software, can be downloaded to reside on and be operated from different platforms used by a variety of operating systems.

The present invention also relates to an apparatus for performing the operations herein. This apparatus may be specially constructed for the required purposes, or it may comprise a general-purpose computing device selectively activated or reconfigured by a computer program stored in the computing device. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Further, the computing devices referred to herein may include a single processor or may be architectures employing multiple processor designs for increased computing capability.

The algorithms and displays presented herein are not inherently related to any particular computing device, virtualized system, or other apparatus. Various general-purpose systems may also be used with programs in accordance with the teachings herein, or it may prove convenient to construct more specialized apparatus to perform the required method steps. The required structure for a variety of these systems will be apparent from the description provided herein. In addition, the present invention is not described with reference to any particular programming language. It will be appreciated that a variety of programming languages may be used to implement the teachings of the present invention as described herein, and any references above to specific languages are provided for disclosure of enablement and best mode of the present invention.

Accordingly, in various embodiments, the present invention can be implemented as software, hardware, and/or other elements for controlling a computer system, computing device, or other electronic device, or any combination or plurality thereof. Such an electronic device can include, for example, a processor, an input device (such as a keyboard, mouse, touchpad, trackpad, joystick, trackball, microphone, and/or any combination thereof), an output device (such as a screen, speaker, and/or the like), memory, long-term storage (such as magnetic storage, optical storage, and/or the like), and/or network connectivity, according to techniques that are well known in the art. Such an electronic device may be portable or nonportable. Examples of electronic devices that may be used for implementing the invention include: a mobile phone, personal digital assistant, smartphone, kiosk, desktop computer, laptop computer, tablet computer, consumer electronic device, consumer entertainment device; music player; camera; television; set-top box; electronic gaming unit; or the like. An electronic device for implementing the present invention may use any operating system such as, for example, iOS or MacOS, available from Apple Inc. of Cupertino, California, or any other operating system that is adapted for use on the device.

While the invention has been described with respect to a limited number of embodiments, those skilled in the art, having benefit of the above description, will appreciate that other embodiments may be devised which do not depart from the scope of the present invention as described herein. In addition, it should be noted that the language used in the specification has been principally selected for readability and instructional purposes, and may not have been selected to delineate or circumscribe the inventive subject matter. Accordingly, the disclosure of the present invention is intended to be illustrative, but not limiting, of the scope of the invention, which is set forth in the claims.
Numbered Aspects of the Invention
1. A computer-implemented method for interpreting user input to perform a task on a computing device having at least one processor, comprising:
   at a processor, receiving context information from a context source;
   at an output device, prompting a user for input;
   at an input device, receiving user input;
   at the processor, interpreting the received user input to derive a representation of user intent;
   at the processor, identifying at least one task and at least one parameter for the task, based at least in part on the derived representation of user intent;
   at the processor, executing the at least one task using the at least one parameter, to derive a result;
   at the processor, generating a dialog response based on the derived result; and
   at the output device, outputting the generated dialog response;
   wherein at least one of the steps of prompting the user for input, interpreting the receiving user input, identifying the at least one task and at least one parameter for the task, and generating the dialog response is performed using the received context information.
2. The method of 1, wherein the received context information comprises at least one selected from the group consisting of:
   application context;
   personal data associated with the user;
   data from a database associated with the user;
   data obtained from dialog history;
   data received from at least one sensor;
   application preferences;
   application usage history;
   data describing an event;
   data describing an acoustic environment in which the spoken input is received;
   current dialog state;
   input previously provided by the user;
   location;
   local time; and
   environmental conditions.
3. The method of 1, wherein:
   prompting the user comprises prompting the user via a conversational interface; and
   receiving user input comprises receiving user input via the conversational interface by:
      receiving spoken input; and
      converting the spoken input to a text representation.
4. The method of 3, wherein converting the spoken input to a text representation comprises:
   generating a plurality of candidate text interpretations of the spoken input; and
   ranking at least a subset of the generated candidate text interpretations;
   wherein at least one of the generating and ranking steps is performed using the received context information.
5. The method of 4, wherein the received context information used in at least one of the generating and ranking steps comprises at least one selected from the group consisting of:
   data describing an acoustic environment in which the spoken input is received;
   data received from at least one sensor;
   vocabulary obtained from a database associated with the user;
   vocabulary associated with application preferences;
   vocabulary obtained from usage history; and
   current dialog state.
6. The method of 1, wherein receiving user input comprises receiving text input.
7. The method of 1, wherein prompting the user comprises generating at least one prompt based at least in part on the received context information.
8. The method of 1, wherein interpreting the received user input to derive a representation of user intent comprises performing natural language processing on the received user input based at least in part on the received context information.
9. The method of 8, wherein the received context information used in interpreting the received user input comprises at least one selected from the group consisting of:
   data describing an event;
   application context;
   input previously provided by the user;
   known information about the user;
   location;
   date;
   environmental conditions; and
   history.
10. The method of 1, wherein performing natural language processing comprises selecting among a plurality of candidate interpretations of the received user input using the received context information.
11. The method of 1, wherein performing natural language processing comprises determining a referent for at least one pronoun in the received user input.
12. The method of 1, wherein identifying at least one task and at least one parameter for the task comprises identifying at least one task and at least one parameter for the task based at least in part on the received context information.
13. The method of 12, wherein identifying at least one task and at least one parameter for the task based at least in part on the received context information comprises:
   receiving a plurality of candidate representations of user intent;
   determining a preferred interpretation of user intent based on at least one selected from the group consisting of:
      at least one domain model;
      at least one task flow model; and
      at least one dialog flow model.
14. The method of 12, wherein the received context information used in identifying at least one task and at least one parameter for the task comprises at least one selected from the group consisting of:
   data describing an event;
   data from a database associated with the user;
   data received from at least one sensor;
   application context;
   input previously provided by the user;
   known information about the user;
   location;
   date;
   environmental conditions; and
   history.
15. The method of 1, wherein generating a dialog response comprises generating a dialog response based at least in part on the received context information.
16. The method of 15, wherein generating a dialog response based at least in part on the received context information comprises at least one selected from the group consisting of:
   generating a dialog response including a named referent;
   generating a dialog response including a symbolic name associated with a telephone number;
   determining which of a plurality of names to use for a referent;
   determining a level of detail for the generated response; and
   filtering a response based on previous output.
17. The method of 15, wherein the received context information used in generating a dialog response comprises at least one selected from the group consisting of:
   data from a database associated with the user;
   application context;
   input previously provided by the user;
   known information about the user;
   location;
   date;
   environmental conditions; and
   history.
18. The method of 1, wherein the received context information comprises at least one selected from the group consisting of:
   context information stored at a server; and
   context information stored at a client.
19. The method of 1, wherein receiving context information from a context source comprises:
   requesting the context information from a context source; and
   receiving the context information in response to the request.
20. The method of 1, wherein receiving context information from a context source comprises:
   receiving at least a portion of the context information prior to receiving user input.
21. The method of 1, wherein receiving context information from a context source comprises:
   receiving at least a portion of the context information after receiving user input.
22. The method of 1, wherein receiving context information from a context source comprises:
   receiving static context information as part of an initialization step; and
   receiving additional context information after receiving user input.
23. The method of 1, wherein receiving context information from a context source comprises:
   receiving push notification of a change in context information; and
   responsive to the push notification, updating locally stored context information.
24. The method of 1, wherein the computing device comprises at least one selected from the group consisting of:
   a telephone;
   a smartphone;
   a tablet computer;
   a laptop computer;
   a personal digital assistant;
   a desktop computer;
   a kiosk;
   a consumer electronic device;
   a consumer entertainment device;
   a music player;
   a camera;
   a television;
   an electronic gaming unit; and
   a set-top box.
25. A computer program product for interpreting user input to perform a task on a computing device having at least one processor, comprising:
   a nontransitory computer-readable storage medium; and
   computer program code, encoded on the medium, configured to cause at least one processor to perform the steps of:
      receiving context information from a context source;
      causing an output device to prompt a user for input;
      receiving user input via an input device;
      interpreting the received user input to derive a representation of user intent;
      identifying at least one task and at least one parameter for the task, based at least in part on the derived representation of user intent;
      executing the at least one task using the at least one parameter, to derive a result;
      generating a dialog response based on the derived result; and
      causing the output device to output the generated dialog response;
   wherein the computer program code is configured to cause at least one processor to perform at least one of the steps of causing the output device to prompt the user for input, interpreting the receiving user input, identifying the at least one task and at least one parameter for the task, and generating the dialog response using the received context information.
26. The computer program product of 25, wherein the received context information comprises at least one selected from the group consisting of:
   application context;
   personal data associated with the user;
   data from a database associated with the user;
   data obtained from dialog history;
   data received from at least one sensor;
   application preferences;
   application usage history;
   data describing an event;
   data describing an acoustic environment in which the spoken input is received;
   current dialog state;
   input previously provided by the user;
   location;
   local time; and
   environmental conditions.
27. The computer program product of 25, wherein:
   the computer program code configured to cause an output device to prompt the user comprises computer program code configured to cause an output device to prompt the user via a conversational interface; and
   the computer program code configured to cause at least one processor to receive user input comprises computer program code configured to cause at least one processor to receive user input via the conversational interface.
28. The computer program product of 25, wherein the computer program code configured to cause at least one processor to receive user input comprises:
   computer program code configured to cause at least one processor to receive spoken input; and
   computer program code configured to cause at least one processor to convert the spoken input to a text representation by:
      generating a plurality of candidate text interpretations of the spoken input; and
      ranking at least a subset of the generated candidate text interpretations;
   wherein at least one of the generating and ranking steps is performed using the received context information.
29. The computer program product of 28, wherein the received context information used in at least one of the generating and ranking steps comprises at least one selected from the group consisting of:
   data describing an acoustic environment in which the spoken input is received;
   data received from at least one sensor;
   vocabulary obtained from a database associated with the user;
   vocabulary associated with application preferences;
   vocabulary obtained from usage history; and
   current dialog state.
30. The computer program product of 25, wherein the computer program code configured to cause at least one processor to prompt the user comprises computer program code configured to cause at least one processor to generate at least one prompt based at least in part on the received context information.
31. The computer program product of 25, wherein the computer program code configured to cause at least one processor to interpret the received user input to derive a representation of user intent comprises computer program code configured to cause at least one processor to perform natural language processing on the received user input based at least in part on the received context information.
32. The computer program product of 31, wherein the received context information used in interpreting the received user input comprises at least one selected from the group consisting of:
   data describing an event;
   application context;
   input previously provided by the user;
   known information about the user;
   location;
   date;
   environmental conditions; and
   history.
33. The computer program product of 25, wherein the computer program code configured to cause at least one processor to identify at least one task and at least one parameter for the task comprises computer program code configured to cause at least one processor to identify at least one task and at least one parameter for the task based at least in part on the received context information.
34. The computer program product of 33, wherein the received context information used in identifying at least one task and at least one parameter for the task comprises at least one selected from the group consisting of:
   data describing an event;
   data from a database associated with the user;
   data received from at least one sensor;
   application context;
   input previously provided by the user;
   known information about the user;
   location;
   date;
   environmental conditions; and
   history.
35. The computer program product of 25, wherein the computer program code configured to cause at least one processor to generate a dialog response comprises computer program code configured to cause at least one processor to generating a dialog response based at least in part on the received context information.
36. The computer program product of 35, wherein the received context information used in generating a dialog response comprises at least one selected from the group consisting of:
   data from a database associated with the user;
   application context;
   input previously provided by the user;
   known information about the user;
   location;
   date;
   environmental conditions; and
   history.
37. The computer program product of 25, wherein the computer program code configured to cause at least one processor to receive context information from a context source comprises:
   computer program code configured to cause at least one processor to request the context information from a context source; and
   computer program code configured to cause at least one processor to receive the context information in response to the request.
38. The computer program product of 25, wherein the computer program code configured to cause at least one processor to receive context information from a context source comprises:
   computer program code configured to cause at least one processor to receive at least a portion of the context information prior to receiving user input.
39. The computer program product of 25, wherein the computer program code configured to cause at least one processor to receive context information from a context source comprises:
   computer program code configured to cause at least one processor to receive at least a portion of the context information after receiving user input.
40. The computer program product of 25, wherein the computer program code configured to cause at least one processor to receive context information from a context source comprises:
   computer program code configured to cause at least one processor to receive static context information as part of an initialization step; and
   the computer program code configured to cause at least one processor to receive additional context information after receiving user input.
41. The computer program product of 25, wherein the computer program code configured to cause at least one processor to receive context information from a context source comprises:
   computer program code configured to cause at least one processor to receive push notification of a change in context information; and
   computer program code configured to cause at least one processor to, responsive to the push notification, update locally stored context information.
42. A system for interpreting user input to perform a task, comprising:
   an output device, configured to prompt a user for input;
   an input device, configured to receive user input;
   at least one processor, communicatively coupled to the output device and to the input device, configured to perform the steps of:
      receiving context information from a context source;
      interpreting the received user input to derive a representation of user intent;
      identifying at least one task and at least one parameter for the task, based at least in part on the derived representation of user intent;
      executing the at least one task using the at least one parameter, to derive a result; and
      generating a dialog response based on the derived result;
   wherein the output device is further configured to output the generated dialog response;
   and wherein at least one of prompting the user for input, interpreting the receiving user input, identifying the at least one task and at least one parameter for the task, and generating the dialog response is performed using the received context information.
43. The system of 42, wherein the received context information comprises at least one selected from the group consisting of:
   application context;
   personal data associated with the user;
   data from a database associated with the user;
   data obtained from dialog history;
   data received from at least one sensor;
   application preferences;
   application usage history;
   data describing an event;
   data describing an acoustic environment in which the spoken input is received;
   current dialog state;
   input previously provided by the user;
   location;
   local time; and
   environmental conditions.
44. The system of 42, wherein:
   the output device is configured to prompt the user via a conversational interface; and
   the input device is configured to receive user input via the conversational interface by receiving spoken input;
   and wherein the at least one processor is configured to convert the spoken input to a text representation.
45. The system of 44, wherein the at least one processor is configured to convert the spoken input to a text representation by:
   generating a plurality of candidate text interpretations of the spoken input; and
   ranking at least a subset of the generated candidate text interpretations;
   wherein at least one of the generating and ranking steps is performed using the received context information.
46. The system of 45, wherein the received context information used in at least one of the generating and ranking comprises at least one selected from the group consisting of:
   data describing an acoustic environment in which the spoken input is received;
   data received from at least one sensor;
   vocabulary obtained from a database associated with the user;
   vocabulary associated with application preferences;
   vocabulary obtained from usage history; and
   current dialog state.
47. The system of 42, wherein the output device is configured to prompt the user by generating at least one prompt based at least in part on the received context information.
48. The system of 42, wherein the at least one processor is configured to interpret the received user input to derive a representation of user intent by performing natural language processing on the received user input based at least in part on the received context information.
49. The system of 48, wherein the received context information used in interpreting the received user input comprises at least one selected from the group consisting of:
   data describing an event;
   application context;
   input previously provided by the user;
   known information about the user;
   location;
   date;
   environmental conditions; and
   history.
50. The system of 42, wherein the at least one processor is configured to identify at least one task and at least one parameter for the task by identifying at least one task and at least one parameter for the task based at least in part on the received context information.
51. The system of 50, wherein the received context information used in identifying at least one task and at least one parameter for the task comprises at least one selected from the group consisting of:
   data describing an event;
   data from a database associated with the user;
   data received from at least one sensor;
   application context;
   input previously provided by the user;
   known information about the user;
   location;
   date;
   environmental conditions; and
   history.
52. The system of 42, wherein the at least one processor is configured to generate a dialog response by generating a dialog response based at least in part on the received context information.
53. The system of 52, wherein the received context information used in generating a dialog response comprises at least one selected from the group consisting of:
   data from a database associated with the user;
   application context;
   input previously provided by the user;
   known information about the user;
   location;
   date;
   environmental conditions; and
   history.
54. The system of 42, wherein the received context information comprises at least one selected from the group consisting of:
   context information stored at a server; and
   context information stored at a client.
55. The system of 42, wherein the at least one processor is configured to receive context information from a context source by:
   requesting the context information from a context source; and
   receiving the context information in response to the request.
56. The system of 42, wherein the at least one processor is configured to receive context information from a context source by:
   receiving at least a portion of the context information prior to receiving user input.
57. The system of 42, wherein the at least one processor is configured to receive context information from a context source by:
   receiving at least a portion of the context information after receiving user input.
58. The system of 42, wherein the at least one processor is configured to receive context information from a context source by:
   receiving static context information as part of an initialization step; and
   receiving additional context information after receiving user input.
59. The system of 42, wherein the at least one processor is configured to receive context information from a context source by:
   receiving push notification of a change in context information; and
   responsive to the push notification, updating locally stored context information.
60. The system of 42, wherein the output device, input device, and at least one processor are implemented as components of at least one selected from the group consisting of:
   a telephone;
   a smartphone;
   a tablet computer;
   a laptop computer;
   a personal digital assistant;
   a desktop computer;
   a kiosk;
   a consumer electronic device;
   a consumer entertainment device;
   a music player;
   a camera;
   a television;
   an electronic gaming unit; and
   a set-top box.

## Claims

1. A system for interpreting user input to perform a task, comprising:
an output device, configured to prompt a user for input;
an input device, configured to receive user input;
at least one processor, communicatively coupled to the output device and to the input device, configured to perform the steps of:
receiving context information from a context source;
interpreting the received user input to derive a representation of user intent;
identifying at least one task and at least one parameter for the task, based at least in part on the derived representation of user intent;
executing the at least one task using the at least one parameter, to derive a result; and
generating a dialog response based on the derived result;
wherein the output device is further configured to output the generated dialog response;
and wherein at least one of prompting the user for input, interpreting the receiving user input, identifying the at least one task and at least one parameter for the task, and generating the dialog response is performed using the received context information.

2. The system of claim 1, wherein the received context information comprises at least one selected from the group consisting of:
application context;
personal data associated with the user;
data from a database associated with the user;
data obtained from dialog history;
data received from at least one sensor;
application preferences;
application usage history;
data describing an event;
data describing an acoustic environment in which the spoken input is received;
current dialog state;
input previously provided by the user;
location;
local time; and
environmental conditions.

3. The system of any proceeding claim 1, wherein:
the output device is configured to prompt the user via a conversational interface; and
the input device is configured to receive user input via the conversational interface by receiving spoken input;
and wherein the at least one processor is configured to convert the spoken input to a text representation.

4. The system of any proceeding claim 3, wherein the at least one processor is configured to convert the spoken input to a text representation by:
generating a plurality of candidate text interpretations of the spoken input; and
ranking at least a subset of the generated candidate text interpretations;
wherein at least one of the generating and ranking steps is performed using the received context information.

5. The system of claim 4, wherein the received context information used in at least one of the generating and ranking comprises at least one selected from the group consisting of:
data describing an acoustic environment in which the spoken input is received;
data received from at least one sensor;
vocabulary obtained from a database associated with the user;
vocabulary associated with application preferences;
vocabulary obtained from usage history; and
current dialog state.

6. The system of any proceeding claim 1, wherein the output device is configured to prompt the user by generating at least one prompt based at least in part on the received context information.

7. The system of any proceeding claim 1, wherein the at least one processor is configured to interpret the received user input to derive a representation of user intent by performing natural language processing on the received user input based at least in part on the received context information.

8. The system of claim 7, wherein the received context information used in interpreting the received user input comprises at least one selected from the group consisting of:
data describing an event;
application context;
input previously provided by the user;
known information about the user;
location;
date;
environmental conditions; and
history.

9. The system of any proceeding claim 1, wherein the at least one processor is configured to identify at least one task and at least one parameter for the task by identifying at least one task and at least one parameter for the task based at least in part on the received context information.

10. The system of claim 9, wherein the received context information used in identifying at least one task and at least one parameter for the task comprises at least one selected from the group consisting of:
data describing an event;
data from a database associated with the user;
data received from at least one sensor;
application context;
input previously provided by the user;
known information about the user;
location;
date;
environmental conditions; and
history.

11. The system of any proceeding claim 1, wherein the at least one processor is configured to generate a dialog response by generating a dialog response based at least in part on the received context information.

12. The system of claim 11, wherein the received context information used in generating a dialog response comprises at least one selected from the group consisting of:
data from a database associated with the user;
application context;
input previously provided by the user;
known information about the user;
location;
date;
environmental conditions; and
history.

13. The system of any proceeding claim 1, wherein the received context information comprises at least one selected from the group consisting of:
context information stored at a server; and
context information stored at a client.

14. The system of any proceeding claim 1, wherein the at least one processor is configured to receive context information from a context source by:
requesting the context information from a context source; and
receiving the context information in response to the request.

15. The system of any proceeding claim 1, wherein the at least one processor is configured to receive context information from a context source by:
receiving at least a portion of the context information prior to receiving user input.

16. The system of any proceeding claim 1, wherein the at least one processor is configured to receive context information from a context source by:
receiving at least a portion of the context information after receiving user input.

17. The system of any proceeding claim 1, wherein the at least one processor is configured to receive context information from a context source by:
receiving static context information as part of an initialization step; and
receiving additional context information after receiving user input.

18. The system of any proceeding claim 1, wherein the at least one processor is configured to receive context information from a context source by:
receiving push notification of a change in context information; and
responsive to the push notification, updating locally stored context information.

19. The system of any proceeding claim 1, wherein the output device, input device, and at least one processor are implemented as components of at least one selected from the group consisting of:
a telephone;
a smartphone;
a tablet computer;
a laptop computer;
a personal digital assistant;
a desktop computer;
a kiosk;
a consumer electronic device;
a consumer entertainment device;
a music player;
a camera;
a television;
an electronic gaming unit; and
a set-top box.
